# EUROPEAN PATENT APPLICATION

(11) **EP 4 797 655 A1**
(43) Date of publication of application: **26.08.2026**
(21) Application number: 24884625.5
(22) Date of filing: 28.10.2024
(51) Int. Cl.: H04L 65/1016

(54) **COMMUNICATION METHOD AND COMMUNICATION APPARATUS**

(30) Priority: 03.11.2023 CN 202311468978
(71) Applicant: HUAWEI TECHNOLOGIES CO., LTD., Shenzhen 518129 (CN)
(72) Inventor: HU, Xiaokun, Shenzhen, Guangdong 518129 (CN); ZUO, Jun, Shenzhen, Guangdong 518129 (CN); JI, Mengdi, Shenzhen, Guangdong 518129 (CN); LI, Mu, Shenzhen, Guangdong 518129 (CN)
(74) Representative: Pfenning, Meinig & Partner mbB
(86) International application number: PCT/CN2024/127579
(87) International publication number: WO 2025/092622

(57) **Abstract**

This application provides a communication method. The communication method includes: An event subscription entity subscribes to a first event from a first event notification entity based on interaction with a user data storage network element, where the first event is an event related to an IMS session of a first user; and the event subscription entity receives a first event notification request message sent by the first event notification entity, where the first event notification request message includes information about the first event. The communication method is for subscribing to an event of a specific user from an IMS AS instance serving the user.

## Description

This application claims priority to Chinese Patent Application No. 202311468978.6, filed with the China National Intellectual Property Administration on November 3, 2023 and entitled "COMMUNICATION METHOD AND COMMUNICATION APPARATUS", which is incorporated herein by reference in its entirety.

### TECHNICAL FIELD

This application relates to the communication field, and specifically, to a communication method and a communication apparatus.

### BACKGROUND

If there are a plurality of network function (network function, NF) service producer instances on a network, when subscribing to an event of a specific user from an NF service producer, an NF service consumer first needs to determine which NF service producer instance provides a service for the user, so as to send a subscription request for the event of the user to the NF service producer instance.

In an IP multimedia system (IP multimedia subsystem, IMS) network, there are usually a plurality of IMS application server (application server, AS) instances that provide a same service for different users. However, these IMS AS instances are not bound to the IMS users served by the IMS AS instances. To be specific, the IMS AS instance serving the user cannot be found based on an IMS user identifier.

How to subscribe to an event of a specific user from an event notification entity serving the user is an urgent problem to be resolved.

### SUMMARY

This application provides a communication method and a communication apparatus, to subscribe to an event of a specific user from an event notification entity serving the user.

According to a first aspect, a communication method is provided. The method may be performed by an event subscription entity, or may be performed by a module (for example, a chip or a circuit) of the event subscription entity. This is not limited. For ease of description, the following uses an example in which the event subscription entity performs the method for description.

The method may include: The event subscription entity subscribes to a first event from a first event notification entity based on interaction between the event subscription entity and a user data storage network element, where the first event is an event related to an IMS session of a first user; and the event subscription entity receives a first event notification request message sent by the first event notification entity, where the first event notification request message includes information about the first event.

Based on the foregoing solution, the event subscription entity subscribes, based on the interaction with the user data storage network element, to an event of a specific user from an event notification entity serving the user.

It should be understood that the event subscription entity may directly subscribe to the first event from the first event notification entity. Alternatively, the event subscription entity may indirectly subscribe to the first event from the first event notification entity. For example, the event subscription entity subscribes to the first event from the first event notification entity through an agent network element (for example, the user data storage network element). For example, the event subscription entity subscribes to the first event from the user data storage network element, and then the user data storage network element subscribes to the first event from the first event notification entity.

Optionally, that the event subscription entity subscribes to the first event from the first event notification entity refers to subscribing to a trigger condition of the first event. The event subscription entity receives the first event notification request message sent by the first event notification entity, where the first event notification request message includes information about the first event, and the information about the first event is an instance of the first event.

With reference to the first aspect, in a part of implementations of the first aspect, that the event subscription entity subscribes to the first event from the first event notification entity based on the interaction between the event subscription entity and the user data storage network element includes: The event subscription entity sends first subscription information to the user data storage network element, where the first subscription information is for subscribing to the information about the first event.

Based on the foregoing solution, the event subscription entity sends subscription-related information to the user data storage network element. After obtaining the subscription-related information, the first event notification entity may start monitoring the first event.

In a possible implementation, the first subscription information includes a user identifier of the first user, an identifier of the first event, and a notification endpoint, and the notification endpoint identifies an address of a network element receiving the first event notification request message.

In a possible implementation, the network element receiving the first event notification request message is the event subscription entity.

In another possible implementation, the network element receiving the first event notification request message is another network element, and the event subscription entity, on behalf of the another network element, subscribes to the first event from the first event notification entity.

In a possible implementation, that the event subscription entity sends the first subscription information to the user data storage network element includes: The event subscription entity sends an IMS user data management update request message to the user data storage network element, where the IMS user data management update request message includes the first subscription information.

In a possible implementation, the method further includes: The event subscription entity generates the first subscription information.

In a possible implementation, the method further includes: The event subscription entity sends first subscription information deletion request information to the user data storage network element, where the first subscription information deletion request information is for requesting to delete the first subscription information.

Optionally, the event subscription entity sends an IMS user data management update request message or an IMS user data management deletion request message to the user data storage network element, where the IMS user data management update request message or the IMS user data management deletion request message includes the first subscription information deletion request information.

With reference to the first aspect, in a part of implementations of the first aspect, that the event subscription entity subscribes to the first event from the first event notification entity based on the interaction between the event subscription entity and the user data storage network element includes: The event subscription entity receives a first address sent by the user data storage network element, where the first address is an address of the first event notification entity; and the event subscription entity sends a first event subscription request message to the first event notification entity based on the received first address, where the first event subscription request message is for subscribing to the information about the first event.

In a possible implementation, the event subscription entity sends first request information to the user data storage network element, where the first request information is for requesting to obtain the first address.

In a possible implementation, the event subscription entity sends an IMS user data management obtaining request message to the user data storage network element, where the IMS user data management obtaining request message includes the first request information.

In a possible implementation, the event subscription entity receives an IMS user data management obtaining response message sent by the user data storage network element, where the IMS user data management obtaining response message includes the first address.

Based on the foregoing solution, the first event notification entity stores an address of the first event notification entity in the user data storage network element, so that the event subscription entity can obtain the address, and initiate a subscription at the first event notification entity based on the address.

In another possible implementation, that the event subscription entity indirectly sends an event subscription request message to the first event notification entity through the user data storage network element includes: The event subscription entity sends a first event subscription request message to the user data storage network element, where the first event subscription request message is for subscribing to the information about the first event from the user data storage network element; and the user data storage network element sends a second event subscription request message to the first event notification entity, where the second event subscription request message is for subscribing to the information about the first event from the first event notification entity.

In a possible implementation, the method further includes: The event subscription entity receives a first event subscription response message from the first event notification entity, where the first event subscription response message indicates that the subscription to the first event has succeeded.

In another possible implementation, that the event subscription entity indirectly receives an event subscription response message from the first event notification entity through the user data storage network element includes: The user data storage network element first receives a second event subscription response message sent by the first event notification entity, where the second event subscription response message indicates that the subscription to the first event succeeds at the first event notification entity; and then the user data storage network element sends a first event subscription response message to the event subscription entity, where the first event subscription request message indicates that the subscription to the first event succeeds at the user data storage network element.

In a possible implementation, the method further includes: The event subscription entity sends a first event unsubscription request message to the first event notification entity, where the first event unsubscription request message is for requesting to cancel the subscription to the first event.

In another possible implementation, that the event subscription entity indirectly sends an event unsubscription request message to the first event notification entity through the user data storage network element includes: The event subscription entity sends a first event unsubscription request message to the user data storage network element, where the first event unsubscription request message is for requesting to cancel the subscription to the first event; and the user data storage network element sends a second event unsubscription request message to the first event notification entity, where the second event unsubscription request message is for requesting to cancel the subscription to the first event.

In a possible implementation, the method further includes: The event subscription entity receives a first event unsubscription response message from the first event notification entity, where the first event unsubscription response message indicates that the subscription to the first event has been canceled.

In another possible implementation, that the event subscription entity indirectly receives an event unsubscription response message from the first event notification entity through the user data storage network element includes: The user data storage network element first receives a second event unsubscription response message sent by the first event notification entity, where the second event unsubscription response message indicates that the subscription to the first event has been canceled; and then the user data storage network element sends a first event unsubscription response message to the event subscription entity, where the first event unsubscription response message indicates that the subscription to the first event is successfully canceled at the user data storage network element.

In a possible implementation, the method further includes: The event subscription entity receives a second address sent by the user data storage network element, where the second address is an address of a second event notification entity, and the second event notification entity is configured to monitor the information about the first event.

In a possible implementation, the method further includes: The event subscription entity sends a first event notification response message to the first event notification entity, where the first event notification response message indicates that the event subscription entity successfully receives the first event notification request message.

In a part of the foregoing implementations, the event subscription entity needs to perform data exchange with the user data storage network element (where the event subscription entity sends data to the user data storage network element or receives data sent by the user data storage network element), and the event subscription entity needs to perform data exchange with the first event notification entity (where the event subscription entity sends data to the first event notification entity or receives data sent by the first event notification entity).

In a possible implementation, the event subscription entity is a data channel application server. The data channel application server indirectly performs data exchange with the user data storage network element through a data channel signaling server, and indirectly performs data exchange with the first event notification entity through the data channel signaling server. In other words, the data channel application server invokes a service of the data channel signaling server, and the data channel signaling server serves as an event subscriber to interact with the first event notification entity.

In another possible implementation, the event subscription entity is a capability exposure network element. The capability exposure network element may directly interact with the user data storage network element, and directly subscribe to the first event from the first event notification entity. Alternatively, the capability exposure network element may indirectly interact with the user data storage network element through a data channel signaling server, and indirectly subscribe to the first event from the first event notification entity through the data channel signaling server. In other words, the capability exposure network element invokes an event subscription service of the data channel signaling server, the data channel signaling server serves as an event subscriber to interact with the user data storage network element, and the data channel signaling server serves as an event subscriber to interact with the first event notification entity.

In still another possible implementation, the event subscription entity is a data channel signaling server. The data channel signaling server may directly interact with the user data storage network element based on subscription-related information obtained from a capability exposure network element or a data channel application server, and directly subscribe to the first event from the first event notification entity.

According to a second aspect, a communication method is provided. The method may be performed by an event notification entity, or may be performed by a module (for example, a chip or a circuit) of the event notification entity. This is not limited. For ease of description, the following uses an example in which the event notification entity performs the method for description.

The method may include: A first event notification entity obtains a subscription of an event subscription entity to a first event based on interaction between the first event notification entity and a user data storage network element, where the first event is an event related to an IMS session of a first user; and the first event notification entity sends a first event notification request message, where the first event notification request message includes information about the first event.

Based on the foregoing solution, the event subscription entity subscribes, based on the interaction with the user data storage network element, to an event of a specific user from an event notification entity serving the user.

With reference to the second aspect, in a part of implementations of the second aspect, that the first event notification entity obtains the subscription of the event subscription entity to the first event based on interaction between the first event notification entity and a user data storage network element includes: The first event notification entity obtains first subscription information from the user data storage network element, where the first subscription information is for subscribing to the information about the first event.

Based on the foregoing solution, the event subscription entity sends subscription-related information to the user data storage network element. After obtaining the subscription-related information, the first event notification entity may start monitoring the first event.

In a possible implementation, that the first event notification entity obtains the first subscription information from the user data storage network element includes: The first event notification entity obtains user data information of the first user from the user data storage network element, where the user data information of the first user includes the first subscription information; or the first event notification entity receives the first subscription information sent by the user data storage network element.

Optionally, the first event notification entity obtains an IMS user data management obtaining request message from the user data storage network element, where the IMS user data management obtaining request message includes the user data information of the first user.

In a possible implementation, the method further includes: The first event notification entity monitors the first event based on the first subscription information.

In a possible implementation, the method further includes: The first event notification entity sends a first event notification request message based on a notification endpoint.

In a possible implementation, the first subscription information includes a user identifier of the first user, an identifier of the first event, and a notification endpoint, and the notification endpoint identifies an address of a network element receiving the first event notification request message.

In a possible implementation, the network element receiving the first event notification request message is the event subscription entity.

In a possible implementation, that the first event notification entity monitors the first event based on the first subscription information includes: The first event notification entity monitors the first event based on the identifier of the first event.

In a possible implementation, that the first event notification entity sends the first event notification request message to the event subscription entity includes: The first event notification entity sends the first event notification request message to the event subscription entity based on the notification endpoint.

In a possible implementation, the method further includes: The first event notification entity receives first event subscription deletion notification information sent by the user data storage network element, where the first event subscription deletion notification information is for notifying that the first subscription information has been deleted.

Optionally, the first event notification entity receives an IMS user data management notification request message sent by the user data storage network element, where the IMS user data management notification request message includes the first event subscription deletion notification information.

With reference to the second aspect, in a part of implementation of the second aspect, that the first event notification entity obtains the subscription of the event subscription entity to the first event based on interaction between the first event notification entity and the user data storage network element includes: The first event notification entity sends a first address and an identifier of the first user to the user data storage network element, where the first address is an address of the first event notification entity; and the first event notification entity receives a first event subscription request message sent by the event subscription entity, where the first event subscription request message is for requesting to subscribe to the first event.

Based on the foregoing solution, the first event notification entity stores an address of the first event notification entity in the user data storage network element, so that the event subscription entity can obtain the address, and initiate a subscription at the first event notification entity based on the address.

In another possible implementation, that the first event notification entity indirectly receives an event subscription request message from the event subscription entity through the user data storage network element includes: The user data storage network element first receives a first event subscription request message sent by the event subscription entity, where the first event subscription request message is for subscribing to the information about the first event from the user data storage network element; and then the user data storage network element sends a second event subscription request message to the first event notification entity, where the second event subscription request message is for subscribing to the information about the first event from the first event notification entity.

In a possible implementation, the first event notification entity sends an IMS user data management update request message to the user data storage network element, where the IMS user data management update request message includes the first address and the identifier of the first user.

In a possible implementation, the method further includes: The first event notification entity sends a first event subscription response message to the event subscription entity, where the first event subscription response message indicates that the subscription to the first event has succeeded.

In another possible implementation, that the first event notification entity indirectly sends an event subscription response message to the event subscription entity through the user data storage network element includes: The first event notification entity sends a second event subscription response message to the user data storage network element, where the second event subscription response message indicates that the subscription to the first event has succeeded at the first event notification entity; and then the user data storage network element sends a first event subscription response message to the event subscription entity, where the first event subscription request message indicates that the subscription to the first event succeeds at the user data storage network element.

In a possible implementation, the method further includes: The first event notification entity receives a first event unsubscription request message from the event subscription entity, where the first event unsubscription request message is for requesting to cancel the subscription to the first event.

In another possible implementation, that the first event notification entity indirectly receives an event unsubscription request message from the event subscription entity through the user data storage network element includes: The user data storage network element first receives a first event unsubscription request message sent by the event subscription entity, where the first event subscription request message is for requesting to cancel the subscription to the first event; and the user data storage network element sends a second event unsubscription request message to the first event notification entity, where the second event unsubscription request message is for requesting to cancel the subscription to the first event.

In a possible implementation, the method further includes: The first event notification entity sends a first event unsubscription response message to the event subscription entity, where the first event unsubscription response message indicates that the subscription to the first event has been canceled.

In another possible implementation, that the first event notification entity indirectly sends an event unsubscription response message to the event subscription entity through the user data storage network element includes: The first event notification entity sends a second event unsubscription response message to the user data storage network element, where the second event unsubscription response message indicates that the subscription to the first event has been canceled; and then the user data storage network element sends a first event unsubscription response message to the event subscription entity, where the first event subscription request message indicates that the subscription to the first event has been canceled.

In a possible implementation, the method further includes: The first event notification entity receives a first event notification response message from the event subscription entity, where the first event notification response message indicates that the event subscription entity successfully receives the first event notification request message.

According to a third aspect, a communication method is provided. The method may be performed by a user data storage network element, or may be performed by a module (for example, a chip or a circuit) of the user data storage network element. This is not limited. For ease of description, the following uses an example in which the user data storage network element performs the method for description.

The method may include: The user data storage network element receives first subscription information from an event subscription entity, where the first subscription information is for subscribing to information about a first event, the first event is an event related to an IMS session of a first user, and the first event is monitored by a first event notification entity; and the user data storage network element sends the first subscription information or user data information of the first user to the first event notification entity, where the user data information of the first user includes the first subscription information.

In a possible implementation, the user data storage network element receives an IMS user data management update request message from the event subscription entity, where the IMS user data management update request message includes the first subscription information.

In a possible implementation, the first subscription information includes a user identifier of the first user, an identifier of the first event, and a notification endpoint, the notification endpoint identifies an address of a network element receiving the first event notification request message, and the first event notification request message includes information about the first event.

In a possible implementation, the method further includes: The user data storage network element receives first subscription information deletion request information, where the first subscription information deletion request information is for requesting to delete the first subscription information; and the user data storage network element deletes the first subscription information from the user data information of the first user.

Optionally, the user data storage network element receives an IMS user data management update request message or an IMS user data management deletion request message from the event subscription entity, where the IMS user data management update request message or the IMS user data management deletion request message includes the first subscription information deletion request information.

In a possible implementation, the method further includes: The user data storage network element sends first event subscription deletion notification information to the first event notification entity, where the first event subscription deletion notification information indicates that the first subscription information has been deleted.

Optionally, the user data storage network element sends an IMS user data management notification request message to the first event notification entity, where the IMS user data management notification request message includes the first event subscription deletion notification information.

According to a fourth aspect, a communication method is provided. The method may be performed by a user data storage network element, or may be performed by a module (for example, a chip or a circuit) of the user data storage network element. This is not limited. For ease of description, the following uses an example in which the user data storage network element performs the method for description.

The method may include: The user data storage network element receives first request information from an event subscription entity, where the first request information is for requesting to obtain a first address, the first address is an address of a first event notification entity, and the first event notification entity is configured to monitor a first event that is of a first user and to which the event subscription entity subscribes; and the user data storage network element sends the first address to the event subscription entity.

Based on the foregoing solution, the first event notification entity stores an address of the first event notification entity in the user data storage network element, so that the event subscription entity can obtain the address, and initiate a subscription at the first event notification entity based on the address.

In a possible implementation, the user data storage network element receives an IMS user data management obtaining request message from the event subscription entity, where the IMS user data management obtaining request message includes the first request information.

In a possible implementation, the user data storage network element sends an IMS user data management obtaining response message to the event subscription entity, where the IMS user data management obtaining response message includes the first address.

In a possible implementation, the method further includes: The user data storage network element receives the first address and an identifier of the first user from the first event notification entity; and the user data storage network element stores the first address in user data information of the first user based on the identifier of the first user.

In a possible implementation, the user data storage network element receives an IMS user management update request message from the first event notification entity, where the IMS user management update request message includes the first address and the identifier of the first user.

In a possible implementation, the method further includes: The user data storage network element receives first event subscription request information sent by the event subscription entity, where the first event subscription request information is for requesting to subscribe to the first event; and the user data storage network element sends second event subscription request information to the first event notification entity, where the second event subscription request information is for requesting to subscribe to the first event.

In a possible implementation, the method further includes: The user data storage network element receives a second event subscription response message sent by the first event notification entity, where the second event subscription response message indicates that the subscription to the first event has succeeded; and the user data storage network element sends a first event subscription response message to the event subscription entity, where the first event subscription response message indicates that the subscription to the first event has succeeded.

In a possible implementation, the method further includes: The user data storage network element receives a first event unsubscription request message sent by the event subscription entity, where the first event unsubscription request message is for requesting to cancel the subscription to the first event; and the user data storage network element sends a second event unsubscription request message to the first event notification entity.

In a possible implementation, the method further includes: The user data storage network element receives a second event unsubscription response message sent by the first event notification entity, where the second event unsubscription response message indicates that the subscription to the first event has been canceled; and the user data storage network element sends a first event unsubscription response message to the event subscription entity, where the first event unsubscription response message indicates that the subscription to the first event has been canceled.

In a possible implementation, the method further includes: The user data storage network element sends a second address to the event subscription entity, where the second address is an address of a second event notification entity, and the second event notification entity is configured to monitor the information about the first event.

According to a fifth aspect, a communication method is provided. The method may be performed by a communication system, or may be performed by a module (for example, a chip or a circuit) disposed in the communication system. This is not limited. The communication system may include an event subscription entity, a user data storage network element, and a first event notification entity. For ease of description, the following uses an event subscription entity, a user data storage network element, and a first event notification entity as an example for description.

The method may include: The event subscription entity subscribes to a first event from the first event notification entity based on interaction between the event subscription entity and a user data storage network element and interaction between a first event notification entity and the user data storage network element, where the first event is an event related to an IMS session of a first user; and the first event notification entity sends a first event notification request message, where the first event notification request message includes information about the first event.

With reference to the fifth aspect, in a part of implementations of the fifth aspect, that the event subscription entity subscribes to the first event from the first event notification entity based on interaction between the event subscription entity and the user data storage network element and interaction between the first event notification entity and the user data storage network element includes: The event subscription entity sends first subscription information to the user data storage network element, where the first subscription information is for subscribing to the information about the first event; and the user data storage network element sends the first subscription information or user data information of the first user to the first event notification entity, where the user data information of the first user includes the first subscription information.

In a possible implementation, that the event subscription entity sends the first subscription information to the user data storage network element includes: The event subscription entity sends an IMS user data management update request message to the user data storage network element, where the IMS user data management update request message includes the first subscription information.

In a possible implementation, the first subscription information includes a user identifier of the first user, an identifier of the first event, and a notification endpoint, and the notification endpoint identifies an address of a network element receiving the first event notification request message.

In a possible implementation, the network element receiving the first event notification request message is the event subscription entity.

In another possible implementation, the network element receiving the first event notification request message is another network element, and the event subscription entity, on behalf of the another network element, subscribes to the first event from the first event notification entity.

In a possible implementation, that the first event notification entity obtains the first subscription information from the user data storage network element includes: The first event notification entity obtains user data information of the first user from the user data storage network element, where the user data information of the first user includes the first subscription information; or the first event notification entity receives the first subscription information sent by the user data storage network element.

In a possible implementation, that the first event notification entity obtains the user data information of the first user from the user data storage network element includes: The first event notification entity obtains an IMS user data management obtaining request message from the user data storage network element, where the IMS user data management obtaining request message includes the user data information of the first user.

In a possible implementation, the method further includes: The event subscription entity generates the first subscription information.

In a possible implementation, the method further includes: The first event notification entity monitors the first event based on the first subscription information.

In a possible implementation, that the first event notification entity monitors the first event based on the first subscription information includes: The first event notification entity monitors the first event based on the identifier of the first event.

In a possible implementation, the method further includes: The first event notification entity sends a first event notification request message based on the notification endpoint.

Optionally, the first event notification entity sends the first event notification request message to the event subscription entity based on the notification endpoint.

In a possible implementation, the method further includes: The event subscription entity sends first subscription information deletion request information to the user data storage network element, where the first subscription information deletion request information is for requesting to delete the first subscription information; the user data storage network element deletes the first subscription information from the user data information of the first user; and the user data storage network element sends first event subscription deletion notification information to the first event notification entity, where the first event subscription deletion notification information is for notifying that the first subscription information has been deleted.

In a possible implementation, the event subscription entity sends an IMS user data management update request message or an IMS user data management deletion request message to the user data storage network element, where the IMS user data management update request message or the IMS user data management deletion request message includes the first subscription information deletion request information.

In a possible implementation, the user data storage network element sends an IMS user data management notification request message to the first event notification entity, where the IMS user data management notification request message includes the first event subscription deletion notification information.

With reference to the fifth aspect, in a part of implementations of the fifth aspect, that the event subscription entity subscribes to the first event from the first event notification entity based on interaction between the event subscription entity and the user data storage network element and interaction between the first event notification entity and the user data storage network element includes: The first event notification entity sends a first address and an identifier of the first user to the user data storage network element, where the first address is an address of the first event notification entity; the user data storage network element sends the first address to the event subscription entity; and the event subscription entity sends a first event subscription request message to the first event notification entity based on the received first address, where the first event subscription request message is for subscribing to the information about the first event.

In another possible implementation, that the event subscription entity indirectly sends an event subscription request message to the first event notification entity through the user data storage network element includes: The event subscription entity sends a first event subscription request message to the user data storage network element, where the first event subscription request message is for subscribing to the information about the first event from the user data storage network element; and the user data storage network element sends a second event subscription request message to the first event notification entity, where the second event subscription request message is for subscribing to the information about the first event from the first event notification entity.

In a possible implementation, the event subscription entity sends first request information to the user data storage network element, where the first request information is for requesting to obtain the first address.

In a possible implementation, the event subscription entity sends an IMS user data management obtaining request message to the user data storage network element, where the IMS user data management obtaining request message includes the first request information.

In a possible implementation, the first event notification entity sends an IMS user data management update request message to the user data storage network element, where the IMS user data management update request message includes the first address and the identifier of the first user.

In a possible implementation, the user data storage network element sends an IMS user data management obtaining response message to the event subscription entity, where the IMS user data management obtaining response message includes the first address.

In a possible implementation, the method further includes: The first event notification entity sends a first event subscription response message to the event subscription entity, where the first event subscription response message indicates that the subscription to the first event has succeeded.

In another possible implementation, that the first event notification entity indirectly sends an event subscription response message to the event subscription entity through the user data storage network element includes: The first event notification entity sends a second event subscription response message to the user data storage network element, where the second event subscription response message indicates that the subscription to the first event succeeds at the first event notification entity; and the user data storage network element sends a first event subscription response message to the event subscription entity, where the first event subscription request message indicates that the subscription to the first event succeeds at the user data storage network element.

In a possible implementation, the method further includes: The event subscription entity sends a first event unsubscription request message to the first event notification entity, where the first event unsubscription request message is for requesting to cancel the subscription to the first event.

In another possible implementation, that the event subscription entity indirectly sends an event unsubscription request message to the first event notification entity through the user data storage network element includes: The event subscription entity sends a first event unsubscription request message to the user data storage network element, where the first event unsubscription request message is for requesting to cancel the subscription to the first event; and the user data storage network element sends a second event unsubscription request message to the first event notification entity, where the second event unsubscription request message is for requesting to cancel the subscription to the first event.

In a possible implementation, the method further includes: The first event notification entity sends a first event unsubscription response message to the event subscription entity, where the first event unsubscription response message indicates that the subscription to the first event has been canceled.

In another possible implementation, that the first event notification entity indirectly sends an event unsubscription response message to the event subscription entity through the user data storage network element includes: The first event notification entity sends a second event unsubscription response message to the user data storage network element, where the second event unsubscription response message indicates that the subscription to the first event has been canceled; and then the user data storage network element sends a first event unsubscription response message to the event subscription entity, where the first event unsubscription response message indicates that the subscription to the first event is successfully canceled at the user data storage network element.

In a possible implementation, the method further includes: The user data storage network element sends a second address to the event subscription entity, where the second address is an address of a second event notification entity, and the second event notification entity is configured to monitor the information about the first event.

In a possible implementation, the method further includes: The event subscription entity sends a first event notification response message to the first event notification entity, where the first event notification response message indicates that the event subscription entity successfully receives the first event notification request message.

In a part of the foregoing implementations, the event subscription entity needs to perform data exchange with the user data storage network element (where the event subscription entity sends data to the user data storage network element or receives data sent by the user data storage network element), and the event subscription entity needs to perform data exchange with the first event notification entity (where the event subscription entity sends data to the first event notification entity or receives data sent by the first event notification entity).

In a possible implementation, the event subscription entity is a data channel application server. The data channel application server indirectly performs data exchange with the user data storage network element through a data channel signaling server, and indirectly performs data exchange with the first event notification entity through the data channel signaling server. In other words, the data channel application server invokes an event subscription service of the data channel signaling server, the data channel signaling server serves as an event reader to interact with the user data storage network element, and the data channel signaling server serves as an event subscriber to interact with the first event notification entity.

In another possible implementation, the event subscription entity is a capability exposure network element. The capability exposure network element may directly interact with the user data storage network element, and directly subscribe to the first event from the first event notification entity. Alternatively, the capability exposure network element may indirectly interact with the user data storage network element through a data channel signaling server, and indirectly subscribe to the first event from the first event notification entity through the data channel signaling server. In other words, the capability exposure network element invokes an event subscription service of the data channel signaling server, the data channel signaling server serves as an event subscriber to interact with the user data storage network element, and the data channel signaling server serves as an event subscriber to interact with the first event notification entity.

In still another possible implementation, the event subscription entity is a data channel signaling server. The data channel signaling server may directly interact with the user data storage network element based on subscription-related information obtained from a capability exposure network element or a data channel application server, and directly subscribe to the first event from the first event notification entity.

According to a sixth aspect, a wireless communication apparatus is provided. The apparatus includes modules or units configured to perform the method according to any one of the first aspect or the possible implementations of the first aspect.

According to a seventh aspect, a wireless communication apparatus is provided. The apparatus includes modules or units configured to perform the method according to any one of the second aspect or the possible implementations of the second aspect.

According to an eighth aspect, a wireless communication apparatus is provided. The apparatus includes modules or units configured to perform the method according to any one of the third aspect or the possible implementations of the third aspect.

According to a ninth aspect, a wireless communication apparatus is provided. The apparatus includes the modules or units configured to perform the method according to any one of the fourth aspect or the possible implementations of the fourth aspect.

According to a tenth aspect, a communication device is provided. The device includes a processor. The processor is coupled to a memory, and may be configured to perform the method according to the first aspect and the possible implementations of the first aspect. In a possible implementation, the communication device further includes the memory. In a possible implementation, the communication device further includes a communication interface, and the processor is coupled to the communication interface. In a possible implementation, the communication device further includes a communication interface, and the processor is coupled to the communication interface.

In an implementation, the communication device is an event subscription entity. When the communication device is the event subscription entity, the communication interface may be a transceiver or an input/output interface.

In another implementation, the communication device is a chip or a chip system. When the communication device is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eleventh aspect, a communication device is provided. The device includes a processor. The processor is coupled to a memory, and may be configured to execute instructions in the memory, to implement the method according to the third aspect and the possible implementations of the third aspect, or the fourth aspect and the possible implementations of the fourth aspect. In a possible implementation, the communication device further includes the memory. In a possible implementation, the communication device further includes a communication interface, and the processor is coupled to the communication interface. In a possible implementation, a transceiver may be a transceiver circuit. In a possible implementation, an input/output interface may be an input/output circuit.

In an implementation, the communication device is a user data storage network element. When the communication device is the user data storage network element, the communication interface may be a transceiver or an input/output interface. In a possible implementation, the transceiver may be a transceiver circuit. In a possible implementation, the input/output interface may be an input/output circuit.

In another implementation, the communication device is a chip or a chip system. When the communication device is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a twelfth aspect, a communication device is provided. The device includes a processor. The processor is coupled to a memory, and may be configured to execute instructions in the memory, to implement the method according to the second aspect and the possible implementations of the second aspect. In a possible implementation, the communication device further includes the memory. In a possible implementation, the communication device further includes a communication interface, and the processor is coupled to the communication interface. In a possible implementation, a transceiver may be a transceiver circuit. In a possible implementation, an input/output interface may be an input/output circuit.

In an implementation, the communication device is an event notification entity. When the communication device is the event notification entity, the communication interface may be a transceiver or an input/output interface. In a possible implementation, the transceiver may be a transceiver circuit. In a possible implementation, the input/output interface may be an input/output circuit.

In another implementation, the communication device is a chip or a chip system. When the communication device is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a thirteenth aspect, a communication apparatus is provided. The apparatus includes an input circuit, an output circuit, and a processing circuit. The processing circuit is configured to: receive a signal through the input circuit; and transmit a signal through the output circuit, to implement the method according to any one of the first aspect to the fourth aspect and any one of the possible implementations of the aspects.

In a specific implementation process, the communication apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, and a signal output by the output circuit may be output to and transmitted by, for example, but not limited to, a transmitter. The input circuit and the output circuit may be different circuits or may be a same circuit, and in this case, the circuit is used as the input circuit and the output circuit respectively at different moments. Specific implementations of the processor and the various circuits are not limited in embodiments of this application.

According to a fourteenth aspect, a processing apparatus is provided. The apparatus includes a processor and a memory. The processor is configured to: read instructions stored in the storage, receive a signal through a receiver, and transmit a signal through a transmitter, to perform the method according to any one of the first aspect to the fourth aspect and any one of the possible implementations of the aspects.

In a possible implementation, there are one or more processors, and there are one or more memories.

In a possible implementation, the memory and the processor may be integrated together, or the memory and the processor are disposed separately.

In a specific implementation process, the memory may be a non-transitory (non-transitory) memory, for example, a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process, for example, sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processor in the foregoing aspect may be a chip, and the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. The memory may be integrated in the processor, or may be located outside the processor and exist independently.

According to a fifteenth aspect, a computer program product is provided. The computer program product includes a computer program (which may also be referred to as code or instructions). When the computer program is run, a computer is caused to perform the method according to any one of the first aspect to the fourth aspect and any one of the possible implementations of the aspects.

According to a sixteenth aspect, a computer-readable medium is provided. The computer-readable medium stores a computer program (which may also be referred to as code or instructions). When the computer program is run on a computer, the computer is caused to perform the method according to any one of the first aspect to the fourth aspect and any one of the possible implementations of the aspects.

According to a seventeenth aspect, a communication system is provided. The communication system includes at least one of the foregoing event subscription entity, user data storage network element, and first event notification entity.

### BRIEF DESCRIPTION OF DRAWINGS

FIG. 1 is a diagram of an example of a communication system to which this application is applicable;
FIG. 2 is a diagram of an architecture of a system according to an embodiment of this application;
FIG. 3 is a schematic flowchart of a communication method according to an embodiment of this application;
FIG. 4 is a schematic flowchart of a communication method according to an embodiment of this application;
FIG. 5 is a schematic flowchart of a communication method according to an embodiment of this application;
FIG. 6 is a block diagram of a communication apparatus according to an embodiment of this application;
FIG. 7 is a block diagram of another communication apparatus according to an embodiment of this application; and
FIG. 8 is a diagram of a chip system according to an embodiment of this application.

### DESCRIPTION OF EMBODIMENTS

For ease of understanding embodiments of this application, the following descriptions are provided first.
1. In this application, unless otherwise specified, "a plurality of" means two or more. In addition, "at least one" may be replaced with "one or more".
2. In this application, unless otherwise specified or there is a logical conflict, terms and/or descriptions in different embodiments are consistent and may be mutually referenced, and technical features in different embodiments may be combined based on an internal logical relationship thereof, to form a new embodiment.
3. Various numbers in this application are merely used for differentiation for ease of description, but are not intended to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other number terms (if existent) are used for distinguishing between similar objects, but do not necessarily indicate a specific order or sequence. Data termed in such a way is interchangeable in appropriate circumstances, so that embodiments described herein can be implemented in other orders than the order illustrated or described herein.
   In addition, any embodiment or design scheme described as an "example" or "for example" in this application should not be explained as being more preferred or having more advantages than another embodiment or design scheme. Exactly, use of the terms such as "example" or "for example" is intended to present a related concept in a specific manner for ease of understanding.
4. The terms "include", "have", and variants thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.
5. In this application, the term "preconfiguration" may include predefinition, for example, definition in a protocol. "Predefinition" may be implemented by pre-storing corresponding code or a corresponding table in a device, or may be implemented in another manner of indicating related information. A specific implementation of "predefinition" is not limited in this application.
6. The term "storage" or "store" in this application may mean "being stored" in one or more memories. The one or more memories may be separately disposed, or may be integrated into an encoder or a decoder, a processor, or a communication apparatus. Alternatively, a part of the one or more memories may be separately disposed, and a part of the one or more memories may be integrated into the decoder, the processor, or the communication apparatus. A type of the memory may be a storage medium in any form. This is not limited.
7. The term "protocol" in this application may be a standard protocol in the communication field, for example, may include a 4th generation (4th generation, 4G) network protocol, a 5th generation (5th generation, 5G) network protocol, a new radio (new radio, NR) protocol, a 5.5G network protocol, a 6th generation (6th generation, 6G) network protocol, and related protocols used in future communication systems. This is not limited in this application.
8. Arrows or blocks shown by dashed lines in the diagrams of the accompanying drawings in the specification of this application indicate optional steps or optional modules.
9. In this application, unless otherwise specified, "/" indicates an "or" relationship between associated objects. For example, A/B may indicate A or B. "And/or" in this application describes only an association relationship for describing associated objects and indicates that three relationships may exist. For example, A and/or B may indicate the following three cases: Only A exists, both A and B exist, and only B exists, where A and B may be singular or plural.
10. The technical solutions provided in embodiments of this application may be applied to wireless communication between communication devices. The wireless communication between the communication devices may include: wireless communication between a network device and a terminal, wireless communication between network devices, and wireless communication between terminals. In embodiments of this application, the term "wireless communication" may also be referred to as "communication" for short, and the term "communication" may also be described as "data transmission", "information transmission", or "transmission".
11. Names of all nodes and messages in this application are merely names specified for ease of description in this application, and may be different in an actual network. It should not be understood that the names of all the nodes and the messages are limited in this application. On the contrary, any name that has a function that is the same as or similar to that of the node or the message used in this application is considered as a method or an equivalent replacement in this application, and falls within the protection scope of this application. Details are not described below again.
12. In this application, "sending information to ... (a terminal)" may be understood as that a destination end of the information is the terminal, and may include directly or indirectly sending the information to the terminal; and "receiving information from ... (the terminal)" may be understood as that a source end of the information is the terminal, and may include directly or indirectly receiving information from the terminal. Necessary processing, for example, a format change, may be performed on the information between the source end and the destination end for information sending. However, the destination end can understand valid information from the source end. A similar expression in this application may be understood similarly, and details are not described herein again.

A communication system to which the technical solutions of this application are applicable is first described.

The technical solutions of this application may be applied to various communication systems, for example, a 6G system, a 5G system, a 4G system (or referred to as a long term evolution (long term evolution, LTE) system), an LTE frequency division duplex (frequency division duplex, FDD) system, an LTE time division duplex (time division duplex, TDD) system, and a future communication system. The technical solutions provided in this application may be further applied to device-to-device (device to device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

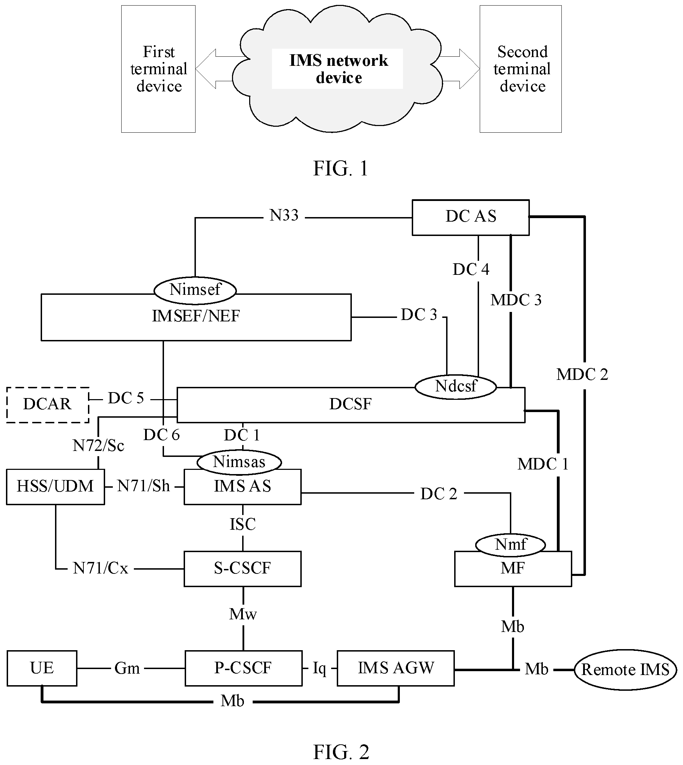

The following describes, with reference to FIG. 1, a communication system 100 to which an embodiment of this application is applicable. The communication system 100 is merely an example, and constitutes no limitation on this application. The communication system 100 includes a first terminal device, a second terminal device, and an IMS network. The IMS network in the communication system 100 may alternatively be a web real-time communication (web real-time communication, WebRTC) network. For ease of description, an IMS network is used as an example for description in this embodiment of this application.

Specifically, the first terminal device and the second terminal device communicate with each other through an IMS network. The first terminal device is a calling device (in other words, a device that initiates a call), and the second terminal device is a called device (in other words, a device receiving the call).

The IMS network may be a set of a plurality of devices that process voice and multimedia services, or may be a set of a plurality of servers that process audio, video, and multimedia services. The IMS network includes one or more network devices, such as a call session control function (call session control function, CSCF) network element, an IMS access media gateway (access media gateway, AGW), a data channel signaling function (data channel signaling function, DCSF) network element, a media function (media function, MF) network element, and a home subscriber server (home subscriber server, HSS).

When the first terminal device is used as a calling device, the first terminal device may be any electronic device having a call function. For example, the first terminal device is user equipment (user equipment, UE). The UE may be any device that can access a network, or may be referred to as terminal equipment (terminal equipment), a terminal apparatus, an access terminal, a user unit, a user station, a mobile station (mobile station, MS), a mobile terminal (mobile terminal, MT), a remote station, a remote terminal, a mobile device, a user terminal, a terminal, a wireless communication device, a user agent, a user apparatus, or the like. The UE may be a device that provides a user with voice/data connectivity, for example, a handheld device or a vehicle-mounted device that has a wireless connection function. Currently, some examples of a terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an AR device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 4G/5G network, a terminal device in a future evolved public land mobile network (public land mobile network, PLMN), and the like.

Alternatively, the UE may be UE in an internet of things (internet of things, IoT) system. IoT is an important part in future development of information technologies. A main technical feature of the IoT is to connect things to a network by using a communication technology, to implement an intelligent network for human-machine interconnection and thing-thing interconnection. In an IoT technology, massive connections, deep coverage, and terminal power saving may be implemented by using, for example, a narrow band (narrow band, NB) technology. The UE may further include an intelligent printer, a train detector, and the like. Main functions of the UE include collecting data (some terminal devices), receiving control information and downlink data of the network device, sending an electromagnetic wave, and transmitting uplink data to the network device.

The UE may be configured to serve as a base station. For example, the user equipment may serve as a scheduling entity that provides sidelink signals between user equipment in vehicle-to-everything (vehicle-to-everything, V2X), device-to-device (device-to-device, D2D), or the like. For example, a cellular phone and a car communicate with each other by using a sidelink signal. The cellular phone communicates with a smart home device without relaying a communication signal through a base station.

When the second terminal device is used as a called device, the second terminal device may be any electronic device having a call function. For example, the second terminal device is user equipment, or the second terminal device is a public safety answering point (public safety answering point, PSAP) in an IMS emergency call scenario (to be specific, a communication device 1 initiates an IMS emergency call (emergency call) to a communication device 2), or is any electronic device that has a call function and that is located at the public safety answering point.

The foregoing network architecture applied to embodiments of this application is merely an example, and a network architecture applicable to embodiments of this application is not limited thereto. Any network architecture that can implement functions of the foregoing network elements is applicable to embodiments of this application. In other words, the network architecture and the service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of a new service scenario, the technical solutions provided in embodiments of this application are also applicable to resolving a similar technical problem.

It may be further understood that the network elements or devices listed in the foregoing network architecture are merely examples for description, and the network architecture applicable to this application may further include another network element or device. This is not limited in this application. Names of the foregoing network elements or devices are defined only for ease of distinguishing between different functions, and should not constitute any limitation on this application. This application does not exclude a possibility of using other names in a 4G network, a 5G network, and another future network. For example, in a 6G network, a part or all of the network elements may still use terms in 4G/5G, or may use other names.

In this embodiment of this application, a communication device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more of computer operating systems that implement service processing through a process (Process), for example, a Linux operating system, a Unix operating system, an Android operating system, an iOS operating system, or a windows operating system. The application layer includes applications such as a browser, an address book, word processing software, and instant messaging software. In addition, a specific structure of an execution body of a method provided in embodiments of this application is not particularly limited in embodiments of this application, provided that communication can be performed according to the method provided in embodiments of this application by running a program that records code of the method provided in embodiments of this application. For example, the execution body of the method provided in embodiments of this application may be the terminal device or the network device, or a functional module that can invoke and execute the program in the terminal device or the network device.

In addition, aspects or features in embodiments of this application may be implemented as a method, an apparatus or a product that uses standard programming and/or engineering technologies. The term "product" used in this application covers a computer program that can be accessed from any computer-readable device, carrier or medium. For example, the computer-readable medium may include but is not limited to: a magnetic storage device (for example, a hard disk drive, a floppy disk, or a magnetic tape), an optical disc (for example, a compact disc (compact disc, CD), and a digital versatile disc (digital versatile disc, DVD)), a smart card, and a flash memory (for example, an erasable programmable read-only memory (erasable programmable read-only memory, EPROM), a card, a stick, or a key drive). In addition, the various storage media described in this specification may represent one or more devices and/or other machine-readable media that are configured to store information. The term "machine-readable medium" may include but is not limited to a radio channel, and various other media that can store, include, and/or carry instructions and/or data.

FIG. 2 is a diagram of a network architecture of an IMS session according to an embodiment of this application. The following briefly describes some network elements or devices in the network architecture shown in FIG. 2.
1. CSCF network element: The CSCF is a functional entity within an IMS and is a core of the IMS. The CSCF is mainly responsible for processing signaling control in a multimedia call session process. The CSCF manages IMS user authentication and quality of service (quality of service, QoS) for an IMS bearer plane, and cooperates with another network element to perform SIP session control, service negotiation, resource allocation, and the like. For convenience of description, the CSCF network element in this application is referred to as the "CSCF".

The CSCF may communicate with a terminal device, or may communicate with a gateway device. For example, the CSCF selects a gateway device communicating with the terminal device, and may also allocate routing information, for example, an IP address or a port, to the terminal device and the gateway device.

By way of example but not limitation, CSCFs are classified into proxy CSCFs (proxy CSCFs, P-CSCFs), interrogating CSCFs (interrogating CSCFs, I-CSCFs), serving CSCFs (serving CSCFs, S-CSCFs), and the like based on functions.

The P-CSCF is an entry node for a user to access an IMS network, and is mainly responsible for forwarding SIP signaling between an IMS user and a home network. The I-CSCF is a unified entry node to an IMS user home network, and is responsible for assigning or querying an S-CSCF serving the user. The S-CSCF is a unified entry node to the IMS user home network, and is responsible for assigning or querying an S-CSCF serving the user.

The foregoing P-CSCF, S-CSCF, and I-CSCF may be configured in different entities independently, or may be integrated in a same entity. This is not limited.

2. IMS-AGW: The IMS-AGW can provide functions of an IMS network access gateway and a media gateway.

The CSCF and the IMS AGW may be collectively referred to as an IMS core. A manner of signaling exchange between network elements within the IMS core is not limited in this application.

3. DCSF network element: The DCSF is a part of a logical functional entity in a data channel server (data channel server, DCS), and the DCSF is mainly configured to provide a data-channel signaling control function.

4. MF network element: The MF is also a part of a logical functional entity in a DCS, and the MF is mainly configured to provide a data-channel media resource management function.

5. Multimedia telephony application server (MultiMedia Telephony application server, MMTel AS): The MMTel AS is an application-layer device located at an upper layer in an IMS system, and provides basic audio and video telephony services and supplementary services. The MMTel AS is a type of IMS AS. An IMS network is an IP bearer-based open system that provides various multimedia services for a user. The MMTel AS interacts with a CSCF over an SIP protocol, to implement triggering and execution of various network services.

6. DCAR (data channel application repository) network element: The DCAR is configured to store a data channel application.

7. IMS application server (application server, AS): The IMS AS is an application-layer device located at a top layer in the IMS system, and provides different services such as basic voice and video telephony services and supplementary services, multimedia conferencing, converged communication, short message gateway, and standard console. For example, an MMTel AS is a type of IMS AS. An IMS network is an IP bearer-based open system that provides various multimedia services for a user. The IMS AS interacts with a CSCF over an SIP protocol, to implement triggering and execution of various network services.

8. HSS network element: In a 4G network, the HSS is responsible for storing IMS user subscription data.

9. Unified data management (unified data management, UDM) network element: In a 5G network, the UDM is responsible for storing IMS user subscription data.

10. NEF (network exposure function) network element: The NEF is a capability exposure network element in a 5G core network (5th generation core network, 5GC) network, and securely exposes various 5GC network services to a third party.

11. IMSEF (IMS exposure function) network element: The IMSEF is a capability exposure network element in an IMS domain, and is configured to securely expose various IMS network services to a third party.

12. DCAS (data channel application server) network element: The DCAS is mainly configured to provide a data-channel application service function.

It may be understood that the foregoing network architecture applied to this application is merely an example, and a network architecture applicable to this application is not limited thereto. Any network architecture that can implement functions of the foregoing network elements is applicable to this application. In other words, the network architecture and the service scenario described in this application are intended to describe the technical solutions in this application more clearly, and do not constitute a limitation on the technical solutions provided in this application. A person of ordinary skill in the art may learn that, with evolution of the network architecture and emergence of a new service scenario, the technical solutions provided in this application are also applicable to resolving a similar technical problem.

It may be further understood that the network elements or devices listed in the foregoing network architecture are merely examples for description, and the network architecture applicable to this application may further include another network element or device. This is not limited in this application. Names of the foregoing network elements or devices are defined only for ease of distinguishing between different functions, and should not constitute any limitation on this application. This application does not exclude a possibility of using other names in a 4G network, a 5G network, and another future network. For example, in a 6G network, a part or all of the network elements may still use terms in 4G/5G, or may use other names.

In this application, a communication device (for example, the terminal device, the CSCF device, or the AS device) includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more of computer operating systems that implement service processing through a process (process), for example, a Linux operating system, a Unix operating system, an Android operating system, an iOS operating system, or a windows operating system. The application layer includes applications such as a browser, an address book, word processing software, and instant messaging software. In addition, a specific structure of an execution body of a method provided in this application is not particularly limited in this application, provided that communication can be performed according to the method provided in this application by running a program that records code of the method provided in this application. For example, the execution body of the method provided in this application may be the terminal device or the network device, or a functional module that can invoke and execute the program in the terminal device or the network device.

In addition, aspects or features in this application may be implemented as a method, an apparatus or a product that uses standard programming and/or engineering technologies. The term "product" used in this application covers a computer program that can be accessed from any computer-readable device, carrier or medium. For example, the computer-readable medium may include but is not limited to: a magnetic storage device (for example, a hard disk drive, a floppy disk, or a magnetic tape), an optical disc (for example, a compact disc (compact disc, CD), and a digital versatile disc (digital versatile disc, DVD)), a smart card, and a flash memory (for example, an erasable programmable read-only memory (erasable programmable read-only memory, EPROM), a card, a stick, or a key drive). The various storage media described in this specification may represent one or more devices and/or other machine-readable media that are configured to store information. The term "machine-readable medium" may include but is not limited to a radio channel, and various other media that can store, include, and/or carry instructions and/or data.

If there are a plurality of NF service producer instances on a network, when subscribing to an event of a specific user from an NF service producer, an NF service consumer first needs to determine which NF service producer instance provides a service for the user, so as to send a subscription request for the event of the user to the NF service producer instance.

When there are a plurality of NF instances serving different users, if each user is consistently served by one NF instance, the NF instances providing services are generally assigned based on user identifier number ranges, in other words, each NF instance provides a service for users in different user identifier number ranges.

The foregoing user identifier may be understood as that, in a mobile communication network, each mobile user is allocated with a plurality of types of user identities, which are for uniquely identifying a user and are used in scenarios such as registration authentication and call routing. Common user identities are as follows.

A mobile subscriber integrated services digital network number (mobile subscriber ISDN number, MSISDN), that is, an integrated services digital network (integrated services digital network, ISDN) number of a mobile user, in a switching network numbering plan of a public switched telephone network, is the only number that can uniquely identify the mobile user in a 2G/3G/4G network. The MSISDN is a mobile phone number used in daily life. The MSISDN is for making a call or sending a short message to a mobile user.

An international mobile subscription identity (international mobile subscription identity, IMSI) is a private identity allocated by the 2G/3G/4G network to a mobile user, and is stored in a SIM (subscriber identity module, subscriber identity module) card of a mobile phone. The IMSI may be simply understood as an ID of the SIM card. An association between the IMSI and the MSISDN is stored in user subscription data.

A generic public subscription identifier (generic public subscription identifier, GPSI) is a public identity allocated by a 5G network to a mobile user, is an externally addressable identifier of the mobile user, and is similar to the MSISDN in the 2G/3G/4G network.

A subscription permanent identifier (subscription permanent identifier, SUPI) is a private identity allocated by a 5G network to a mobile user, is similar to the IMSI in the 2G/3G/4G network, and is stored in a SIM card of a mobile phone. An association between a GPSI and the SUPI is stored in 5G user subscription data.

An IP multimedia public identity (IP multimedia public identity, IMPU) is a public identity of an IMS user, is an externally addressable identifier of the user, and is for IMS signaling routing.

An IP multimedia private identity (IP multimedia private identity, IMPI) is a private identity of an IMS user, and is used in scenarios such as registration, authentication, and verification when a user accesses an IMS network.

A UDM in a 5G network is used as an example. When an SMF, as a service consumer, needs to subscribe to (one or more) specific events of a user from a service producer, that is, the UDM, the SMF first needs to find a UDM instance serving the user by performing UDM service discovery on an NRF by using a user identifier (a GPSI or a SUPI), and then the SMF sends a subscription request message to the UDM instance to subscribe to an event of the user.

In an IMS network, there are generally a plurality of IMS AS instances of a same type providing a same service for different users. However, these IMS AS instances are not bound to the IMS users served by the IMS AS instances. In other words, an IMS AS instance serving the user cannot be directly found by using an IMS user identifier (an IMPU, an IMPI, a GPSI/an MSISDN, or a SUPI/an IMSI), because when third-party registration is performed based on an iFC (initial filter criteria) of a user after UE of the user completes IMS registration, an S-CSCF dynamically selects an IMS AS instance serving the user. In addition, when the same UE of the user performs registration a plurality of times, the S-CSCF may select different IMS AS instances for the UE. An MMTel AS is an AS that provides IMS basic audio and video telephony services and supplementary services for an IMS user. The MMTel AS is used as an example. When UE A performs third-party registration for the 1^{st} time, the S-CSCF selects an MMTel AS-1 instance for the UE A. However, when the UE-A subsequently performs third-party registration, if the S-CSCF detects that the MMTel AS-1 instance is faulty, the S-CSCF selects another MMTel AS instance, for example, an MMTel AS-2 instance, for the UE A.

In a conventional technology, a problem of how an event subscription entity subscribes to an event of a specific user from an IMS AS instance (referred to as an IMS AS for short below) serving the user cannot be resolved.

It should be noted that, for security purposes, if a third-party device outside the network needs to subscribe to an event of a specific user from the IMS AS, the third-party device needs to subscribe to the event through a capability exposure network element within an operator network. After receiving an event subscription request from the third-party device (outside the network), the capability exposure network element, on behalf of the third-party device, subscribes to the event of the specific user from the IMS AS within the network.

In other words, the event subscription entity mentioned in this specification may be another network element within the operator network, for example, a data channel signaling server (for example, a DCSF network element), or may be a capability exposure network element (for example, an IMSEF network element/NEF network element) within the operator network. The capability exposure network element, on behalf of the third-party device outside the network, subscribes to the event of the specific user from the IMS AS within the network. The capability exposure network element may directly subscribe to the event of the specific user from the IMS AS, or the capability exposure network element may indirectly subscribe to the event of the specific user from the IMS AS through the data channel signaling server, to be specific, the capability exposure network element invokes an event subscription service of the data channel signaling server, and the data channel signaling server serves as an event subscription entity to subscribe to the event of the specific user from the IMS AS. A data channel application server (for example, a DC AS network element) in the network indirectly subscribes to the event of the specific user from the IMS AS through a data channel signaling server, to be specific, the data channel application server invokes an event subscription service of the data channel signaling server, and the data channel signaling server serves as an event subscription entity to subscribe to the event of the specific user from the IMS AS.

This application provides a plurality of data transmission methods, to subscribe to an event of a specific user from a notifier network element serving the user.

It should be understood that descriptions of specific scenarios in embodiments of this application are merely examples. In addition to the foregoing described application scenarios, the method provided in embodiments of this application is also applicable to an application scenario in which a similar problem exists.

The following describes a plurality of communication methods provided in embodiments of this application in detail with reference to the accompanying drawings.

It should be understood that step numbers in embodiments of this application are merely used for description, and do not limit a sequence of the steps.

For ease of understanding and description, the following describes the communication method in embodiments of this application through interaction between an event subscription entity and a first event notification entity, and interaction between a user data storage network element and the first event notification entity as an example. However, this should not constitute any limitation on an execution body of the communication method in embodiments of this application. For example, the method performed by the event subscription entity may alternatively be performed by a module (for example, a circuit, a chip, or a chip system) of the event subscription entity, or may alternatively be implemented by a logical node, a logical module, or software that can implement all or a part of functions of the event subscription entity. The method performed by the first event notification entity may alternatively be performed by a module (for example, a circuit, a chip, or a chip system) of the first event notification entity, or may alternatively be implemented by a logical node, a logical module, or software that can implement all or a part of functions of the first event notification entity.

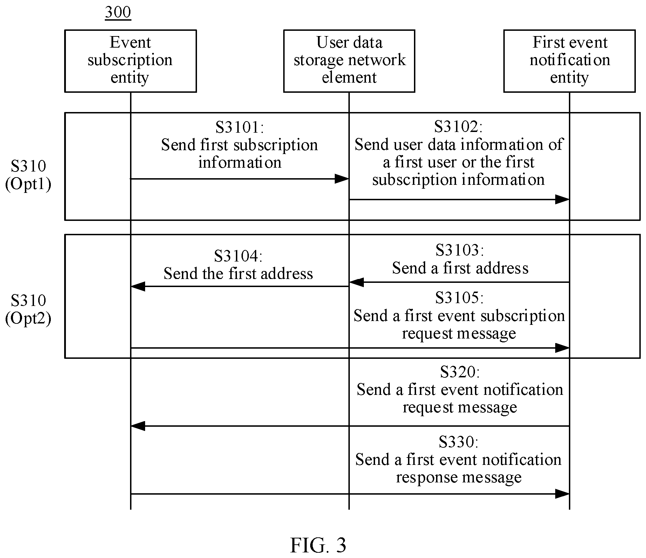

FIG. 3 shows a method 300 according to this application. The method in FIG. 3 includes at least a part of content of steps S310 to S330.

S310: An event subscription entity subscribes to a first event from a first event notification entity based on interaction with a user data storage network element, where the first event is an event related to an IMS session of a first user.

The event subscription entity may directly subscribe to the first event from the first event notification entity. Alternatively, the event subscription entity may indirectly subscribe to the first event from the first event notification entity. For example, the event subscription entity subscribes to the first event from the first event notification entity through an agent network element (for example, the user data storage network element).

S310 may be implemented in two manners. The following specifically describes the two manners.

In a possible implementation, S310 includes S3101 and S3102. In an example, S310 may be replaced with S3101 and S3102.

S3101: An event subscription entity sends first subscription information to a user data storage network element, where the first subscription information is for subscribing to information about a first event, and the first event is an event related to the IMS session of the first user.

Optionally, the first subscription information includes a user identifier of the first user, an identifier of the first event, and a notification endpoint (notification endpoint), and the notification endpoint identifies an address of a network element receiving a first event notification request message.

Optionally, the network element receiving the first event notification request message is the event subscription entity.

Optionally, that the event subscription entity sends the first subscription information to the user data storage network element includes: The event subscription entity sends an IMS user data management update (Nhss_ImsSDM_Update) request message to the user data storage network element, where the Nhss_ImsSDM_Update request message includes the first subscription information.

S3102: The user data storage network element sends the first subscription information or user data information of the first user to the first event notification entity, where the user data information of the first user includes the first subscription information.

It should be understood that the first event notification entity identifies, based on the first subscription information in user data of the first user, an event that needs to be monitored by the first event notification entity, and starts monitoring (one or more) of subscribed events of the first user.

In another possible implementation, S310 includes S3103 to S3105. In an example, S310 may be replaced with S3103 to S3105.

S3103: The first event notification entity sends a first address to the user data storage network element, where the first address is an address of the first event notification entity.

In an implementation, the first event notification entity further sends an identifier of the first user to the user data storage network element, so that the user data storage network element stores the first address in user data of the first user based on the identifier of the first user.

Optionally, the first event notification entity sends the first address and/or the identifier of the first user to the user data storage network element by using an Nhss_ImsSDM_Update request message.

S3104: The user data storage network element sends the first address to the event subscription entity.

In an implementation, the event subscription entity sends an IMS user data management obtaining (Nhss_ImsSDM_Get) request message to the user data storage network element, where the IMS user data management obtaining request message is for requesting to obtain the first address.

After receiving the Nhss_ImsSDM_Get request message, the user data storage network element sends the first address to the event subscription entity.

S3105: The event subscription entity sends a first event subscription request message to the first event notification entity based on the first address, where the first event subscription request message is for requesting to subscribe to the first event.

Optionally, the event subscription entity may first send a first event subscription request message to the user data storage network element, so that the user data storage network element sends the first event subscription request message to the first event notification entity based on the first address.

S320: The first event notification entity sends the first event notification request message to a network element that needs to receive the first event notification request message, where the first event notification request message includes the information about the first event.

The network element that needs to receive the first event notification request message is, for example, an event subscription entity.

It should be understood that, after obtaining a subscription of the event subscription entity to the first event, the first event notification entity starts monitoring the first event. When detecting that the first event occurs, the first event notification entity sends the first event notification request message to the network element that needs to receive the first event notification request message.

S330: The event subscription entity sends a first event notification response message to the first event notification request message, where the first event notification response message indicates that the event subscription entity successfully receives the first event notification request message.

In the foregoing method, the event subscription entity needs to perform data exchange with the user data storage network element (where the event subscription entity sends data to the user data storage network element or receives data sent by the user data storage network element), and the event subscription entity needs to perform data exchange with the first event notification entity (where the event subscription entity sends data to the first event notification entity or receives data sent by the first event notification entity).

In a possible implementation, the event subscription entity is a data channel application server. The data channel application server indirectly performs data exchange with the user data storage network element through a data channel signaling server, and indirectly performs data exchange with the first event notification entity through the data channel signaling server. In other words, the data channel application server invokes an event subscription service of the data channel signaling server, the data channel signaling server serves as an event reader to interact with the user data storage network element, and the data channel signaling server serves as an event subscriber to interact with the first event notification entity.

In another possible implementation, the event subscription entity is a capability exposure network element. The capability exposure network element may directly interact with the user data storage network element, and directly subscribe to the first event from the first event notification entity. Alternatively, the capability exposure network element may indirectly interact with the user data storage network element through a data channel signaling server, and indirectly subscribe to the first event from the first event notification entity through the data channel signaling server. In other words, the capability exposure network element invokes a service of the data channel signaling server, and the data channel signaling server serves as an event subscriber to interact with the user data storage network element.

In still another possible implementation, the event subscription entity is a data channel signaling server. The data channel signaling server may directly interact with the user data storage network element based on subscription-related information obtained from a capability exposure network element or a data channel application server, and directly subscribe to the first event from the first event notification entity.

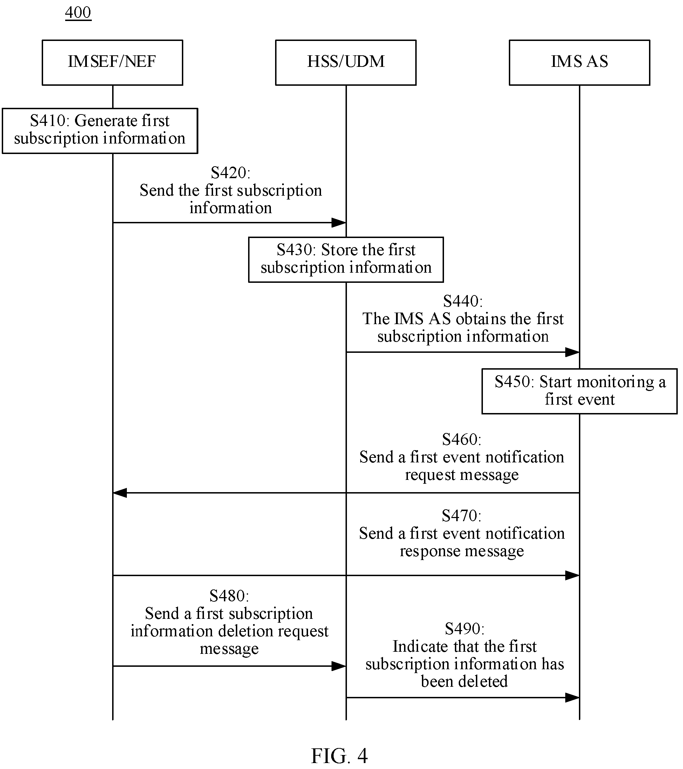

With reference to FIG. 4, the following describes in detail an implementation of the method provided in this application by using an example in which the first event notification entity is an IMS AS, the event subscription entity is an IMSEF network element/NEF network element (referred to as an IMSEF/NEF for short below), and the user data storage network element is an HSS/a UDM. It should be understood that a method 400 is a specific implementation of the method 300.

FIG. 4 shows a method 400 according to this application. The method in FIG. 4 includes at least a part of content of steps S410 to S490.

S410: The IMSEF/NEF generates first subscription information.

S420: The IMSEF/NEF sends the first subscription information to the HSS/UDM.

S430: The HSS/UDM stores the first subscription information.

S440: The IMS AS obtains the first subscription information from the HSS/UDM.

S450: The IMS AS starts monitoring a first event.

S460: The IMS AS sends a first event notification request message to the IMSEF/NEF.

S470: The IMSEF/NEF sends a first event notification response message to the IMS AS.

S480: The IMSEF/NEF sends first subscription information deletion request information to the HSS/UDM.

S490: The HSS/UDM notifies the IMS AS that the first subscription information has been deleted.

Details are described below.

S410: The IMSEF/NEF generates the first subscription information.

The first subscription information is for subscribing to information about the first event, and the first event is an event related to an IMS session of a first user. The first subscription information includes a user identifier of the first user, an identifier of the first event, and a notification endpoint, and the notification endpoint identifies an address of a network element receiving the first event notification request message.

Optionally, the first subscription information is included in an event subscription record of the first user. A subscription record includes at least a globally unique notification correlation ID (or an identifier ID of an event subscription record), an event list, and a notification endpoint. The event list includes one or more events, the one or more events include the first event, and the notification endpoint identifies an address of a network element that needs to receive related information about a subscribed event (that is, a uniform resource identifier (uniform resource identifier, URI) of an NF receiving the first event notification). Optionally, a network element receiving related information about the first event is the IMSEF/NEF.

S420: The IMSEF/NEF sends the first subscription information to the HSS/UDM.

First, the IMSEF/NEF first finds, by performing NRF service discovery based on the user identifier of the first user, an HSS/a UDM serving the user.

Then, the IMSEF/NEF sends the first subscription information to the HSS/UDM. Optionally, the first subscription information is carried in an Nhss_ImsSDM_Update request message.

In a possible implementation, the IMSEF/NEF sends the Nhss_ImsSDM_Update request message to the HSS/UDM, where the Nhss_ImsSDM_Update request message carries an event subscription record of the first user by using a PUT method.

In another possible implementation, a full update is performed on event subscription data of the user in the HSS/UDM by using a PUT method of an Nhss_ImsSDM_Update request message. Specifically, the IMSEF/NEF first downloads all the event subscription data of the user from the HSS/UDM by using an Nhss_ImsSDM_Get request message, adds a new event subscription record generated in step S410 into the downloaded event subscription data, and then sends fully updated event subscription data to the HSS/UDM by using the PUT method of the Nhss_ImsSDM_Update request message.

S430: The HSS/UDM stores the first subscription information.

It should be understood that the HSS/UDM stores the first subscription information in user data of the first user. User data of each user may store zero or more event subscription records. These event subscription records are collectively called event subscription data.

Optionally, the HSS/UDM sends an Nhss_ImsSDM_Update response message to the IMSEF/NEF, to indicate that the user data is successfully updated.

S440: The IMS AS obtains the first subscription information from the HSS/UDM.

Specifically, the IMS AS may obtain user data information of the first user from the HSS/UDM, where the user data information of the first user includes the first subscription information. There are three main scenarios in which the IMS AS obtains user data of a user from the HSS/UDM.
1. During third-party registration, the IMS AS downloads, by using the Nhss_ImsSDM_Get request/response message, the user data of the user from the HSS/UDM serving the user.
2. During third-party registration, the IMS AS further subscribes to a change to user data of the user at the HSS/UDM serving the user. Subsequently, if a change to the user data of the user occurs, the HSS/UDM sends an IMS user data management notification (Nhss_ImsSDM_Notification) request message of the change to the user data to the IMS AS, where the IMS user data management notification request message carries content of the change to the user data, and the content includes a resource ID (a resource URI corresponding to changed data), a change type (such as adding, deleting, replacing, moving, or the like), an original value and a new value, and the like.
   In this case, it may also be considered as that the IMS AS receives the first subscription information sent by the HSS/UDM.
3. In an abnormal scenario, for example, when the IMS AS triggers a user service, if the IMS AS finds that the user data of the user does not exist, the IMS AS may alternatively download, by using an Nhss_ImsSDM_Get request/response message, the user data of the user from the HSS/UDM serving the user.

S450: The IMS AS starts monitoring the first event.

The IMS AS records and identifies, based on the first subscription information in the user data of the first user, the first event monitored by the IMS AS, to start monitoring the first event.

S460: The IMS AS sends the first event notification request message.

When detecting that the subscribed event of the first user occurs, the IMS AS sends the first event notification request message to a notification endpoint based on the notification endpoint recorded in the first subscription information, to notify the information about the first event.

S470: The IMS AS receives the first event notification response message.

The notification endpoint returns the first event notification response message to the IMS AS, to indicate that the first event notification request message is successfully received.

S480: The IMSEF/NEF sends the first subscription information deletion request information to the HSS/UDM.

When the IMSEF/NEF needs to cancel the subscription to the first event, the IMSEF/NEF sends the first subscription information deletion request information to the HSS/UDM, to request to delete the first subscription information. The HSS/UDM deletes, based on an event subscription record or an identifier of the first subscription information carried in the request message, corresponding event subscription record or the first subscription information from the user data of the first user.

In an implementation, the first subscription information deletion request information is an Nhss_ImsSDM_Update request message. The IMSEF/NEF sends the Nhss_ImsSDM_Update request message to the HSS/UDM, wherein the Nhss_ImsSDM_Update request messageuses a delete method and carries a notification correlation ID parameter to indicate a to-be-deleted event subscription record.

Deletion of an event subscription record by the IMSEF/NEF is implemented in an incremental update manner, or may be implemented in a full update manner. Specifically, the IMSEF/NEF downloads all the event subscription data of the user from the HSS/UDM by using an Nhss_ImsSDM_Get request message, deletes the event subscription record from the downloaded event subscription data, and then sends fully updated event subscription data to the HSS/UDM by using the PUT method of an Nhss_ImsSDM_Update request message.

S490: The HSS/UDM notifies the IMS AS that the first subscription information has been deleted.

The HSS/UDM sends first event subscription deletion notification information to the IMS AS that subscribes to a change to the user data, where the first event subscription deletion notification information is for notifying that the first subscription information has been deleted.

Optionally, the first event subscription deletion notification information is an Nhss_ImsSDM_Notification request message, notifying that a corresponding event subscription record is deleted.

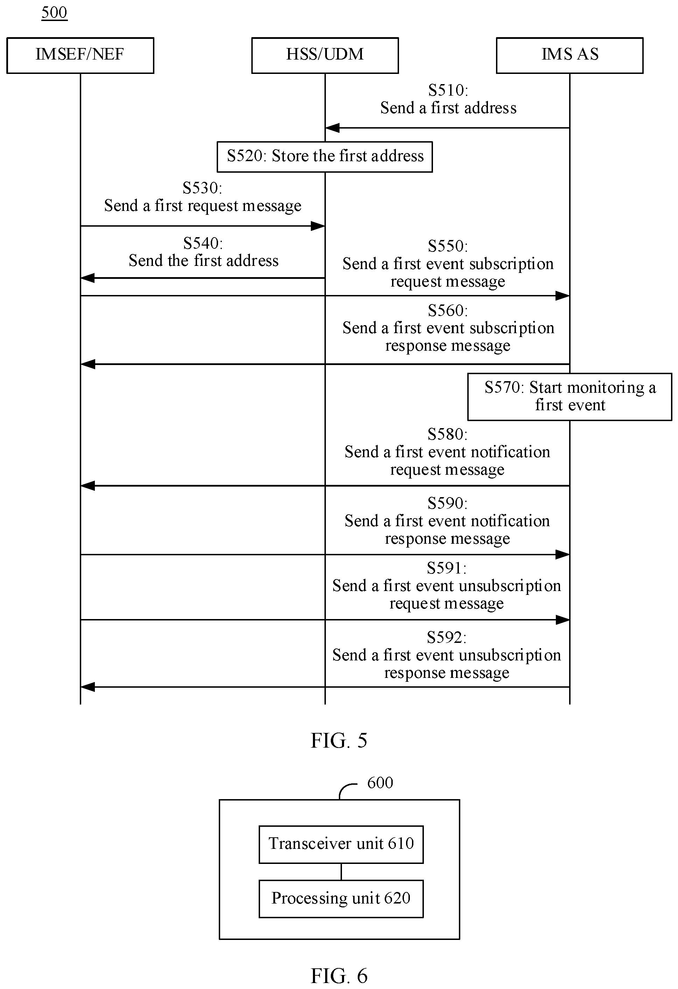

FIG. 5 shows a method 500 provided in this application. An implementation of the method provided in this application is described in detail by using an example in which a first event notification entity is an IMS AS, an event subscription entity is an IMSEF/NEF, and a user data storage network element is an HSS/a UDM. It should be understood that the method 500 is a specific implementation of the method 300.

The method in FIG. 5 includes at least a part of content of steps S510 to S592.

S510: The IMS AS sends a first address to the HSS/UDM, where the first address is an address of the IMS AS.

S520: The HSS/UDM stores the first address.

S530: The IMSEF/NEF sends first request information to the HSS/UDM, to request to obtain the first address.

S540: The HSS/UDM sends the first address to the IMSEF/NEF.

S550: The IMSEF/NEF sends a first event subscription request message to the IMS AS.

S560: The IMS AS sends a first event subscription response message to the IMSEF/NEF.

S570: The IMS AS starts monitoring a first event.

S580: The IMS AS sends a first event notification request message.

S590: The IMS AS receives a first event notification response message.

S591: The IMSEF/NEF sends a first event unsubscription request message to the HSS/UDM.

S592: The HSS/UDM sends a first event unsubscription response message to the IMSEF/NEF.

Details are described below.

S510: The IMS AS sends the first address to the HSS/UDM, where the first address is the address of the IMS AS.

After initial registration or re-registration of UE succeeds, an S-CSCF first selects, by performing iFC trigger analysis, an IMS AS that needs to be triggered for the first user, and then the S-CSCF sends a register request message to the selected IMS AS to perform third-party registration.

The IMS AS downloads, through an Sh interface (by using a user data request (user data request, UDR)/user data answer (user data answer, UDA) message) or an Nhss service-oriented interface (by using an Nhss_ImsSDM_Get request/response message), user data (including user identity data and service subscription data of the first user) from an HSS/UDM serving the first user.

In an implementation, the IMS AS sends an Nhss_ImsSDM_Update request message to the HSS/UDM, where the Nhss_ImsSDM_Update request message carries an AS type and address information of the IMS AS by using a PUT method.

In another implementation, a full update is performed on IMS AS address data of the first user in the HSS/UDM by using a PUT method of an Nhss_ImsSDM_Update request message. Specifically, the IMSEF/NEF needs to first download the IMS AS address data of the user from the HSS/UDM by using an Nhss_ImsSDM_Get request message, update a new IMS AS address record into the downloaded IMS AS address data, and then send updated IMS AS address data to the HSS/UDM by using the PUT method of the Nhss_ImsSDM_Update request message.

In still another implementation, a first address record may alternatively be updated into the user data in the HSS/UDM by using a subscription data update request (Profile-Update-Request, PUR)/subscription data update answer (Profile-Update-Answer, PUA) message through the Sh interface.

It should be understood that, based on service subscription of a user, user data of the user may store zero or more IMS AS address records. For example, if a user subscribes to both an IMS basic audio and video call service and a customized ring back tone service, two IMS AS address records may be stored in user data of the user. One record is address information of an MMTel AS instance, and the other is address information of a customized ring back tone AS instance.

In addition, the IMS AS further sends an identifier of the first user to the HSS/UDM, where the identifier of the first user may be included in information about the first address.

S520: The HSS/UDM stores the first address.

Specifically, the HSS/UDM updates, based on the identifier of the first user, an address record of the IMS AS carried in an Nhss_ImsSDM_Update request message into user data of the first user.

Optionally, the HSS/UDM returns an Nhss_ImsSDM_Update response message to the IMS AS, to indicate that the user data of the first user is successfully updated.

S530: The IMSEF/NEF sends the first request information to the HSS/UDM, to request to obtain the first address.

The IMSEF/NEF first finds, by performing NRF service discovery based on a user identifier (such as an MSISDN or an IMPU) of the first user, an HSS/a UDM serving the first user.

Then, the IMSEF/NEF sends the first request information to the HSS/UDM serving the user, to download the address record of the IMS AS serving the first user.

Optionally, the first request information is carried in an Nhss_ImsSDM_Get request message.

S540: The HSS/UDM sends the first address to the IMSEF/NEF.

Optionally, the HSS/UDM includes the address record of the IMS AS serving the first user in an Nhss_ImsSDM_Get response message, and sends the Nhss_ImsSDM_Get response message to the IMSEF/NEF.

S550: The IMSEF/NEF sends the first event subscription request message to the IMS AS.

The IMSEF/NEF sends the first event subscription request message to the IMS AS based on the first address, where the first event subscription request message is for subscribing to a first event of the first user. The first event subscription request message carries subscription-related information, including: the user identifier of the first user, an identifier of the first event, and a notification endpoint.

In an implementation, the IMSEF/NEF may send a first event subscription request message to the HSS/UDM serving the first user, and the HSS/UDM subscribes to the first event from the IMS AS based on the first address. For example, the HSS/UDM sends a second event subscription request message to the IMS AS, where the second event subscription request message also carries the subscription-related information, including the user identifier of the first user, the identifier of the first event, and the notification endpoint.

S560: The IMS AS sends the first event subscription response message to the IMSEF/NEF.

After receiving the first event subscription request message, the IMS AS first creates a subscription resource, generates a subscription ID (subscription ID), and starts monitoring the first event of the first user.

Subsequently, the IMS AS returns the first event subscription response message to the IMSEF/NEF, where the first event subscription response message indicates that the subscription to the first event has succeeded, and returns a created subscription resource URI by using a location header field, where the URI includes the generated subscription ID.

In an implementation, the IMS AS may first send a first event subscription response message to the HSS/UDM, and then the HSS/UDM sends a second event subscription response message to the IMSEF/NEF, to indicate a subscription success.

After receiving the first event subscription response message, the IMSEF/NEF stores the subscription resource URI.

S570: The IMS AS starts monitoring the first event.

S580: The IMS AS sends the first event notification request message.

After detecting that the first event is triggered, the IMS AS sends the first event notification request message to the notification endpoint based on the notification endpoint recorded in the first event subscription request message or the second event subscription request message, to notify the information about the first event.

Optionally, a network element corresponding to the notification endpoint is the IMSEF/NEF.

S590: The IMS AS receives the first event notification response message.

The notification endpoint returns the first event notification response message to the IMS AS, to indicate that the first event notification request message is successfully received.

S591: The IMSEF/NEF sends the first event unsubscription request message to the HSS/UDM.

The IMSEF/NEF sends the first event unsubscription request message to the IMS AS serving the first user, to request to cancel the subscription to the first event.

Optionally, the subscription to the first event is canceled by using a delete method, and a resource URI of the first event unsubscription request message indicates a subscription ID that is of an event subscription and that needs to be deleted.

In an implementation, the IMSEF/NEF may first send a first event unsubscription request message to the HSS/UDM serving the first user, and the HSS/UDM sends the first event unsubscription request message to the IMS AS based on the first address.

S592: The HSS/UDM sends the first event unsubscription response message to the IMS AS, to indicate that the subscription to the first event has been canceled.

In an implementation, the IMS AS may first send a first event unsubscription response message to the HSS/UDM, and then the HSS/UDM sends a first event unsubscription response message to the IMSEF/NEF.

In addition, after the first user performs initial registration/re-registration subsequently, the S-CSCF may select, for the user, another IMS AS triggering a service of a same type for some reasons (for example, the original IMS AS serving the user is faulty or overloaded), to perform third-party registration. For example, another MMTel AS instance is selected to provide a telephony service for the user. In this case, a new IMS AS (that is, an example of a second event notification entity) updates an address of the new IMS AS into the HSS/UDM serving the user.

The address of the new IMS AS is referred to as a second address, and the new IMS AS sends the second address to the HSS/UDM in a manner the same as that in step S510.

Because the IMSEF/NEF has subscribed to a change to IMS AS address data of the user data from the HSS/UDM serving the first user, when a change to the IMS AS address data of the first user in the HSS/UDM occurs, the HSS/UDM sends an Nhss_ImsSDM_Notification request message to the IMSEF/NEF, where the Nhss_ImsSDM_Notification request message carries information about the change to an IMS AS address. In other words, when an IMS AS address changes, the HSS/UDM sends the second address to the IMSEF/NEF. After receiving the second address, the IMSEF/NEF returns an Nhss_ImsSDM_Notification response message to the HSS/UDM, to indicate a notification success.

FIG. 6 is a block diagram of a communication apparatus 600 according to an embodiment of this application. The apparatus 600 includes a transceiver unit 610 and a processing unit 620. The transceiver unit 610 may communicate with the outside, and the processing unit 620 is configured to perform data processing. The transceiver unit 610 may also be referred to as a communication interface or a communication unit.

In a possible implementation, the apparatus 600 may further include a storage unit. The storage unit may be configured to store instructions and/or data. The processing unit 620 may read the instructions and/or the data in the storage unit.

The apparatus 600 may be configured to perform actions performed by the event subscription entity in the foregoing method embodiments. In this case, the apparatus 600 may be an event subscription entity or a component that may be disposed in the event subscription entity. The transceiver unit 610 is configured to perform sending and receiving-related operations on an event subscription entity side in the foregoing method embodiments. For example, the transceiver unit 610 may be configured to perform the operation of sending the first subscription information to the user data storage network element in step 3101, the operation of sending the first event subscription request message to the first event notification entity in step 3105, and the operation of sending the first event notification response message to the first event notification request message in step 330 in FIG. 3. Alternatively, the transceiver unit 610 may be configured to perform the operation of sending the first subscription information to the HSS/UDM in step 420, the operation of sending the first event notification response message to the IMS AS in step 460, and the operation of sending the first subscription information deletion request information to the HSS/UDM in step 470 in FIG. 4. Alternatively, the transceiver unit 610 may be configured to perform the operation of sending the first request information to the HSS/UDM in step 530, the operation of sending the first event subscription request message to the IMS AS in step 550, and the operation of sending the first event unsubscription request message to the HSS/UDM in step 591 in FIG. 5. The processing unit 620 is configured to perform processing-related operations on an event subscription entity side in the foregoing method embodiments. For example, the processing unit 620 may be configured to perform the operation of generating the first subscription information in step 410 in FIG. 4.

Alternatively, the apparatus 600 may be configured to perform actions performed by the user data storage network element in the foregoing method embodiments. In this case, the apparatus 600 may be a user data storage network element or a component that may be disposed in the user data storage network element. The transceiver unit 610 is configured to perform sending and receiving-related operations on a user data storage network element side in the foregoing method embodiments. For example, the transceiver unit 610 may be configured to perform the operation of sending the first address to the event subscription entity in step 3104 in FIG. 3. Alternatively, the transceiver unit 610 may be configured to perform the operation of notifying the IMS AS that the first subscription information has been deleted in step 490 in FIG. 4. Alternatively, the transceiver unit 610 may be configured to perform the operation of sending the first address to the IMSEF/NEF in step 540, and the operation of sending the first event unsubscription response message to the IMSEF/NEF in step 592 in FIG. 5. The processing unit 620 is configured to perform processing-related operations on a user data storage network element side in the foregoing method embodiments.

Alternatively, the apparatus 600 may be configured to perform actions performed by the event notification entity in the foregoing method embodiments. In this case, the apparatus 600 may be an event notification entity or a component that may be disposed in the event notification entity. The transceiver unit 610 is configured to perform receiving and sending-related operations on an event notification entity side in the foregoing method embodiments. For example, the transceiver unit 610 may be configured to perform the operation of sending the first event notification request message to the network element that needs to receive the first event notification request message in step 320 in FIG. 3. Alternatively, the transceiver unit 610 may be configured to perform the operation of sending the first event notification request message to the IMSEF/NEF in step 460 in FIG. 4. Alternatively, the transceiver unit 610 may be configured to perform the operation of sending the first event subscription response message to the IMSEF/NEF in step 560 in FIG. 5. The processing unit 620 is configured to perform processing-related operations on an event notification entity side in the foregoing method embodiments.

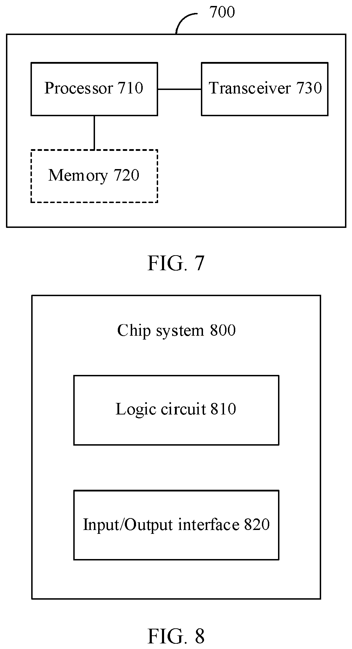

As shown in FIG. 7, an embodiment of this application further provides a communication apparatus 700. The communication apparatus 700 includes a processor 710. The processor 710 is coupled to a memory 720. The memory 720 is configured to store a computer program or instructions and/or data. The processor 710 is configured to execute the computer program or the instructions and/or the data stored in the memory 720, so that the method in the foregoing method embodiments is performed.

In a possible implementation, the communication apparatus 700 includes one or more processors 710.

In a possible implementation, as shown in FIG. 7, the communication apparatus 700 may further include a memory 7720.

In a possible implementation, the communication apparatus 700 includes one or more memories 720.

In a possible implementation, the memory 720 and the processor 710 may be integrated together, or disposed separately.

In a possible implementation, as shown in FIG. 7, the wireless communication apparatus 700 may further include a transceiver 730. The transceiver 730 is configured to receive and/or send a signal. For example, the processor 710 is configured to control the transceiver 730 to receive and/or send a signal.

As a solution, the communication apparatus 700 is configured to implement operations performed by the event notification entity in the foregoing method embodiments.

For example, the processor 710 is configured to implement processing-related operations performed by the event notification entity in the foregoing method embodiments, and the transceiver 730 is configured to implement receiving and sending-related operations performed by the event notification entity in the foregoing method embodiments.

In another solution, the communication apparatus 700 is configured to implement operations performed by the user data storage network element in the foregoing method embodiments.

For example, the processor 710 is configured to implement processing-related operations performed by the user data storage network element in the foregoing method embodiments, and the transceiver 730 is configured to implement receiving and sending-related operations performed by the user data storage network element in the foregoing method embodiments.

In still another solution, the communication apparatus 700 is configured to implement operations performed by the event subscription entity in the foregoing method embodiments.

For example, the processor 710 is configured to implement processing-related operations performed by the event subscription entity in the foregoing method embodiments, and the transceiver 730 is configured to implement receiving and sending-related operations performed by the event subscription entity in the foregoing method embodiments.

As shown in FIG. 8, an embodiment of this application provides a chip system 800. The chip system 800 (or may be referred to as a processing system) includes a logic circuit 810 and an input/output interface (input/output interface) 820.

The logic circuit 810 may be a processing circuit in the chip system 800. The logic circuit 810 may be coupled to a storage unit, and invoke instructions in the storage unit, so that the chip system 800 can implement the methods and functions in embodiments of this application. The input/output interface 820 may be an input/output circuit in the chip system 800, and outputs information processed by the chip system 800, or inputs to-be-processed data or signaling information to the chip system 800 for processing.

In a solution, the chip system 800 is configured to implement operations performed by the event subscription entity, the user data storage network element, or the event notification entity in the foregoing method embodiments.

For example, the logic circuit 810 is configured to implement processing-related operations performed by the event subscription entity in the foregoing method embodiments, and the input/output interface 820 is configured to implement sending and/or receiving-related operations performed by the event subscription entity in the foregoing method embodiments.

An embodiment of this application further provides a computer-readable storage medium, where the computer-readable storage medium stores computer instructions for implementing the method performed by the event subscription entity, or the method performed by the user data storage network element, or the method performed by the event notification entity in the foregoing method embodiments.

For example, when the computer program is executed by a computer, the computer is caused to implement the method performed by the event subscription entity, or the method performed by the user data storage network element, or the method performed by the event notification entity in the foregoing method embodiments.

An embodiment of this application further provides a computer program product including instructions. When the instructions are executed by a computer, the computer is caused to implement the method performed by the event subscription entity, or the method performed by the user data storage network element, or the method performed by the event notification entity in the foregoing method embodiments.

An embodiment of this application further provides a communication system. The communication system includes the event subscription entity, the user data storage network element, and the event notification entity in the foregoing embodiments.

For explanations and beneficial effects of related content of any wireless communication apparatus provided above, refer to the corresponding method embodiment provided above. Details are not described herein.

In this embodiment of this application, the event subscription entity, the user data storage network element, or the event notification entity may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a main memory). An operating system at the operating system layer may be any one or more of computer operating systems that implement service processing through a process (process), for example, a Linux operating system, a Unix operating system, an Android operating system, an iOS operating system, or a windows operating system. The application layer may include applications such as a browser, an address book, word processing software, and instant messaging software.

A specific structure of an execution body of a method provided in embodiments of this application is not particularly limited in embodiments of this application, provided that communication can be performed according to the method provided in embodiments of this application by running a program that records code of the method provided in embodiments of this application. For example, the method provided in embodiments of this application may be executed by an event subscription entity, a user data storage network element, an event notification entity, or a functional module that is in the event subscription entity, the user data storage network element, or the event notification entity and that can invoke and execute a program.

Aspects or features in embodiments of this application may be implemented as a method, an apparatus, or a product that uses standard programming and/or engineering technologies. The term "product" in this specification may cover a computer program that can be accessed from any computer-readable device, carrier, or medium. For example, the computer-readable medium may include but is not limited to: a magnetic storage device (for example, a hard disk drive, a floppy disk, or a magnetic tape), an optical disc (for example, a compact disc (compact disc, CD), and a digital versatile disc (digital versatile disc, DVD)), a smart card, and a flash memory (for example, an erasable programmable read-only memory (erasable programmable read-only memory, EPROM), a card, a stick, or a key drive).

The various storage media described in this specification may represent one or more devices and/or other machine-readable media that are configured to store information. The term "machine-readable medium" may include but is not limited to a radio channel, and various other media that can store, include, and/or carry instructions and/or data.

It should be understood that, the processor mentioned in embodiments of this application may be a central processing unit (central processing unit, CPU), and may further be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described herein is intended to include, but is not limited to, these and any other appropriate type of memories.

A person of ordinary skill in the art may be aware that, in combination with the examples described in embodiments disclosed in this specification, units and algorithm steps may be implemented by electronic hardware or a combination of computer software and the electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus and method may be implemented in other manners. For example, the apparatus embodiments described above are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one place, or may be distributed over a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When a function is implemented in a form of a software functional unit and sold or used as an independent product, the function may be stored in a computer-readable storage medium. Based on such an understanding, the technical solutions in embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in embodiments of this application shall fall within the protection scope of this application. Therefore, the protection scope of this application shall be subject to the protection scope of the claims.

## Claims

1. A communication method, comprising:
subscribing, by an event subscription entity, to a first event from a first event notification entity based on interaction between the event subscription entity and a user data storage network element, wherein the first event is an event related to an IMS session of a first user; and
receiving, by the event subscription entity, a first event notification request message sent by the first event notification entity, wherein the first event notification request message comprises information about the first event.

2. The method according to claim 1, wherein the subscribing, by the event subscription entity, to the first event from the first event notification entity based on the interaction with the user data storage network element comprises:
sending, by the event subscription entity, first subscription information to the user data storage network element, wherein the first subscription information is for subscribing to the information about the first event.

3. The method according to claim 2, wherein the first subscription information comprises a user identifier of the first user, an identifier of the first event, and a notification endpoint, and the notification endpoint identifies an address of a network element receiving the first event notification request message.

4. The method according to claim 2 or 3, wherein the sending, by the event subscription entity, the first subscription information to the user data storage network element comprises:
sending, by the event subscription entity, an IMS user data management update request message to the user data storage network element, wherein the IMS user data management update request message comprises the first subscription information.

5. The method according to any one of claims 2 to 4, wherein the method further comprises:
sending, by the event subscription entity, first subscription information deletion request information to the user data storage network element, wherein the first subscription information deletion request information is for requesting to delete the first subscription information.

6. The method according to claim 5, wherein the sending, by the event subscription entity, the first subscription information deletion request information to the user data storage network element comprises:
sending, by the event subscription entity, an IMS user data management update request message or an IMS user data management deletion request message to the user data storage network element, wherein the IMS user data management update request message or the IMS user data management deletion request message comprises the first subscription information deletion request information.

7. The method according to claim 1, wherein the subscribing, by the event subscription entity, to the first event from the first event notification entity based on the interaction with the user data storage network element comprises:
receiving, by the event subscription entity, a first address sent by the user data storage network element, wherein the first address is an address of the first event notification entity; and
sending, by the event subscription entity, a first event subscription request message to the first event notification entity based on the first address, wherein the first event subscription request message is for subscribing to the information about the first event.

8. The method according to claim 7, wherein the method further comprises:
sending, by the event subscription entity, first request information to the user data storage network element, wherein the first request information is for requesting to obtain the first address.

9. The method according to claim 8, wherein the sending, by the event subscription entity, the first request information to the user data storage network element comprises:
sending, by the event subscription entity, an IMS user data management obtaining request message to the user data storage network element, wherein the IMS user data management obtaining request message comprises the first request information.

10. The method according to any one of claims 7 to 9, wherein the receiving, by the event subscription entity, the first address sent by the user data storage network element comprises:
receiving, by the event subscription entity, an IMS user data management obtaining response message sent by the user data storage network element, wherein the IMS user data management obtaining response message comprises the first address.

11. The method according to any one of claims 7 to 10, wherein the method further comprises:
receiving, by the event subscription entity, a first event subscription response message from the first event notification entity, wherein the first event subscription response message indicates that the subscription to the first event has succeeded.

12. The method according to any one of claims 7 to 11, wherein the method further comprises:
sending, by the event subscription entity, a first event unsubscription request message to the first event notification entity, wherein the first event unsubscription request message is for requesting to cancel the subscription to the first event.

13. The method according to any one of claims 7 to 12, wherein the method further comprises:
receiving, by the event subscription entity, a first event unsubscription response message from the first event notification entity, wherein the first event unsubscription response message indicates that the subscription to the first event has been canceled.

14. The method according to any one of claims 7 to 13, wherein the method further comprises:
receiving, by the event subscription entity, a second address sent by the user data storage network element, wherein the second address is an address of a second event notification entity, and the second event notification entity is configured to monitor the information about the first event.

15. The method according to any one of claims 1 to 14, wherein the method further comprises:
sending, by the event subscription entity, a first event notification response message to the first event notification entity, wherein the first event notification response message indicates that the event subscription entity successfully receives the first event notification request message.

16. A communication method, comprising:
obtaining, by a first event notification entity, a subscription of an event subscription entity to a first event based on interaction between the first event notification entity and a user data storage network element, wherein the first event is an event related to an IMS session of a first user; and
sending, by the first event notification entity, a first event notification request message, wherein the first event notification request message comprises information about the first event.

17. The method according to claim 16, wherein the obtaining, by the first event notification entity, the subscription of the event subscription entity to the first event based on the interaction with the user data storage network element comprises:
obtaining, by the first event notification entity, first subscription information from the user data storage network element, wherein the first subscription information is for subscribing to the information about the first event.

18. The method according to claim 17, wherein the obtaining, by the first event notification entity, the first subscription information from the user data storage network element comprises:
obtaining, by the first event notification entity, user data information of the first user from the user data storage network element, wherein the user data information of the first user comprises the first subscription information; or
receiving, by the first event notification entity, the first subscription information sent by the user data storage network element.

19. The method according to claim 18, wherein the obtaining, by the first event notification entity, the user data information of the first user from the user data storage network element comprises:
obtaining, by the first event notification entity, an IMS user data management obtaining request message from the user data storage network element, wherein the IMS user data management obtaining request message comprises the user data information of the first user.

20. The method according to any one of claims 17 to 19, wherein the method further comprises:
monitoring, by the first event notification entity, the first event based on the first subscription information.

21. The method according to any one of claims 17 to 20, wherein the first subscription information comprises a user identifier of the first user, an identifier of the first event, and a notification endpoint, and the notification endpoint identifies an address of a network element receiving the first event notification request message.

22. The method according to claim 21, wherein the network element receiving the first event notification request message is the event subscription entity.

23. The method according to claim 21 or 22, wherein the monitoring, by the first event notification entity, the first event based on the first subscription information comprises:
monitoring, by the first event notification entity, the first event based on the identifier of the first event.

24. The method according to any one of claims 21 to 23, wherein the sending, by the first event notification entity, the first event notification request message comprises:
sending, by the first event notification entity, the first event notification request message based on the notification endpoint.

25. The method according to any one of claims 17 to 24, wherein the method further comprises:
receiving, by the first event notification entity, first event subscription deletion notification information sent by the user data storage network element, wherein the first event subscription deletion notification information indicates that the first subscription information has been deleted.

26. The method according to claim 16, wherein the obtaining, by the first event notification entity, the subscription of the event subscription entity to the first event based on the interaction with the user data storage network element comprises:
sending, by the first event notification entity, a first address and an identifier of the first user to the user data storage network element, wherein the first address is an address of the first event notification entity; and
receiving, by the first event notification entity, a first event subscription request message sent by the event subscription entity, wherein the first event subscription request message is for requesting to subscribe to the first event.

27. The method according to claim 26, wherein the sending, by the first event notification entity, the first address and the identifier of the first user to the user data storage network element comprises:
sending, by the first event notification entity, an IMS user management update request message to the user data storage network element, wherein the IMS user management update request message comprises the first address and the identifier of the first user.

28. The method according to claim 26 or 27, wherein the method further comprises:
sending, by the first event notification entity, a first event subscription response message to the event subscription entity, wherein the first event subscription response message indicates that the subscription to the first event has succeeded.

29. The method according to any one of claims 26 to 28, wherein the method further comprises:
receiving, by the first event notification entity, a first event unsubscription request message from the event subscription entity, wherein the first event unsubscription request message is for requesting to cancel the subscription to the first event.

30. The method according to any one of claims 26 to 29, wherein the method further comprises:
sending, by the first event notification entity, a first event unsubscription response message to the event subscription entity, wherein the first event unsubscription response message indicates that the subscription to the first event has been canceled.

31. The method according to any one of claims 16 to 30, wherein the method further comprises:
receiving, by the first event notification entity, a first event notification response message, wherein the first event notification response message indicates that the first event notification request message is successfully received.

32. A communication method, comprising:
receiving, by a user data storage network element, first subscription information from an event subscription entity, wherein the first subscription information is for subscribing to information about a first event, the first event is an event related to an IMS session of a first user, and the first event is monitored by a first event notification entity; and
sending, by the user data storage network element, the first subscription information or user data information of the first user to the first event notification entity, wherein the user data information of the first user comprises the first subscription information.

33. The method according to claim 32, wherein the first subscription information comprises a user identifier of the first user, an identifier of the first event, and a notification endpoint, and the notification endpoint identifies an address of a network element receiving first event notification request message.

34. The method according to claim 32 or 33, wherein the receiving, by the user data storage network element, the first subscription information from the event subscription entity comprises:
receiving, by the user data storage network element, an IMS user data management update request message from the event subscription entity, wherein the IMS user data management update request message comprises the first subscription information.

35. The method according to any one of claims 32 to 34, wherein the method further comprises:
receiving, by the user data storage network element, first subscription information deletion request information from the event subscription entity, wherein the first subscription information deletion request information is for requesting to delete the first subscription information; and
deleting, by the user data storage network element, the first subscription information from the user data information of the first user.

36. The method according to claim 35, wherein the receiving, by the user data storage network element, the first subscription information deletion request information from the event subscription entity comprises:
receiving, by the user data storage network element, an IMS user data management update request message or an IMS user data management deletion request message from the event subscription entity, wherein the IMS user data management update request message or the IMS user data management deletion request message comprises the first subscription information deletion request information.

37. The method according to any one of claims 32 to 36, wherein the method further comprises:
sending, by the user data storage network element, first event subscription deletion notification information to the first event notification entity, wherein the first event subscription deletion notification information is for notifying the first event notification entity that the first subscription information has been deleted.

38. The method according to claim 37, wherein the sending, by the user data storage network element, the first event subscription deletion notification information to the first event notification entity comprises:
sending, by the user data storage network element, an IMS user data management notification request message to the first event notification entity, wherein the IMS user data management notification request message comprises the first event subscription deletion notification information.

39. A communication method, comprising:
receiving, by the user data storage network element, first request information from an event subscription entity, wherein the first request information is for requesting to obtain a first address, the first address is an address of a first event notification entity, and the first event notification entity is configured to monitor a first event that is of a first user and to which the event subscription entity subscribes; and
sending, by the user data storage network element, the first address to the event subscription entity.

40. The method according to claim 39, wherein the receiving, by the user data storage network element, the first request information from the event subscription entity comprises:
receiving, by the user data storage network element, an IMS user data management obtaining request message from the event subscription entity, wherein the IMS user data management obtaining request message comprises the first request information.

41. The method according to claim 39 or 40, wherein the sending, by the user data storage network element, the first address to the event subscription entity comprises:
sending, by the user data storage network element, an IMS user data management obtaining response message to the event subscription entity, wherein the IMS user data management obtaining response message comprises the first address.

42. The method according to any one of claims 39 to 41, wherein the method further comprises:
receiving, by the user data storage network, the first address and an identifier of the first user from the first event notification entity; and
storing, by the user data storage network element, the first address in user data information of the first user based on the identifier of the first user.

43. The method according to claim 42, wherein the receiving, by the user data storage network element, the first address and the identifier of the first user from the first event notification entity comprises:
receiving, by the user data storage network element, an IMS user management update request message from the first event notification entity, wherein the IMS user management update request message comprises the first address and the identifier of the first user.

44. The method according to any one of claims 39 to 43, wherein the method further comprises:
receiving, by the user data storage network element, first event subscription request information sent by the event subscription entity, wherein the first event subscription request information is for requesting to subscribe to the first event from the user data storage network element; and
sending, by the user data storage network element, second event subscription request information to the first event notification entity based on the first address, wherein the second event subscription request information is for requesting to subscribe to the first event from the first event notification entity.

45. The method according to any one of claims 39 to 44, wherein the method further comprises:
receiving, by the user data storage network element, a second event subscription response message sent by the first event notification entity, wherein the second event subscription response message indicates, to the user data storage network element, that the subscription to the first event has succeeded at the first event notification entity; and
sending, by the user data storage network element, a first event subscription response message to the event subscription entity, wherein the first event subscription response message indicates, to the event subscription entity, that the subscription to the first event has succeeded at the user data storage network element.

46. The method according to any one of claims 39 to 45, wherein the method further comprises:
receiving, by the user data storage network element, a first event unsubscription request message sent by the event subscription entity, wherein the first event unsubscription request message is for requesting to cancel the subscription to the first event; and
sending, by the user data storage network element, a second event unsubscription request message to the first event notification entity, wherein the first event unsubscription request message is for requesting to cancel the subscription to the first event.

47. The method according to any one of claims 39 to 46, wherein the method further comprises:
receiving, by the user data storage network element, a second event unsubscription response message sent by the first event notification entity, wherein the second event unsubscription response message indicates that the subscription to the first event has been canceled; and
sending, by the user data storage network element, a first event unsubscription response message to the event subscription entity, wherein the first event unsubscription response message indicates that the subscription to the first event has been canceled.

48. The method according to any one of claims 39 to 47, wherein the method further comprises:
sending, by the user data storage network element, a second address to the event subscription entity, wherein the second address is an address of a second event notification entity, and the second event notification entity is configured to monitor information about the first event.

49. A communication apparatus, comprising:
a unit configured to implement the method according to any one of claims 1 to 15; or a unit configured to implement the method according to any one of claims 16 to 31; or a unit configured to implement the method according to any one of claims 32 to 38; or a unit configured to implement the method according to any one of claims 39 to 48.

50. A computer-readable storage medium, wherein the computer-readable storage medium stores a computer program, and when the computer program is run,
the method according to any one of claims 1 to 15 is performed, or
the method according to any one of claims 16 to 31 is performed, or
the method according to any one of claims 32 to 38 is performed, or
the method according to any one of claims 39 to 48 is performed.

51. A communication system, comprising one or more of an event subscription entity, a first event notification entity, and a user data storage network element, wherein the event subscription entity is configured to perform the method according to any one of claims 1 to 15, the first event notification entity is configured to perform the method according to any one of claims 16 to 31, the user data storage network element is configured to perform the method according to any one of claims 32 to 38; or the user data storage network element is configured to perform the method according to any one of claims 39 to 48.
